# EUROPEAN PATENT APPLICATION

(11) **EP 4 783 671 A1**
(43) Date of publication of application: **29.07.2026**
(21) Application number: 24868626.3
(22) Date of filing: 13.09.2024
(51) Int. Cl.: H04W 36/34, H04W 36/00, H04W 36/08, H04W 36/10

(54) **APPARATUS AND METHOD FOR SUPPORTING HANDOVER IN WIRELESS COMMUNICATION SYSTEM**

(30) Priority: 19.09.2023 US 202363539105 P
(71) Applicant: LG Electronics Inc., Yeongdeungpo-gu Seoul 07336 (KR)
(72) Inventor: HAN, Jaemin, Seoul 06772 (KR); BYUN, Daewook, Seoul 06772 (KR); KIM, Seokjung, Seoul 06772 (KR)
(74) Representative: Mooser, Sebastian Thomas
(86) International application number: PCT/KR2024/013995
(87) International publication number: WO 2025/063649

(57) **Abstract**

The present disclosure relates to an apparatus and a method for supporting handover in a wireless communication system and may comprise: a step of determining initiation of an L1L2 triggered mobility (LTM) configuration for at least one cell belonging to at least one other base station; a step of exchanging, between the base stations, a configuration of candidate cells for the LTM, resource allocation information for early TA acquisition, and information related to support for a cell change according to subsequent performing of the LTM; a UE reconfiguration completion step of an LTM candidate cell; a step of performing an early TA acquisition procedure, notifying a cell change between the base stations, and performing data forwarding according to the cell change; and the like.

## Description

### TECHNICAL FIELD

The following description relates to a wireless communication system, and more specifically, to an apparatus and method for supporting L1/L2 Triggered Mobility (LTM) handover in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for efficiently supporting L1/L2 Triggered Mobility (LTM) handover in a wireless communication system.

The present disclosure relates to an apparatus and method for supporting inter-Centralized Unit (CU) LTM in a wireless communication system.

The present disclosure relates to an apparatus and method in which a serving CU initiates inter-CU LTM configuration in a wireless communication system.

The present disclosure relates to an apparatus and method for proposing inter-CU LTM based on an L3 or L1 measurement report message in a wireless communication system.

The present disclosure relates to an apparatus and method for proposing candidate cell for inter-CU LTM based on an L3 or L1 measurement report message in a wireless communication system.

The present disclosure relates to an apparatus and method for proposing a preparation and configuration procedure for inter-CU LTM in a wireless communication system.

The present disclosure relates to an apparatus and method for supporting inter-CU early Timing Advance (TA) acquisition in a wireless communication system.

The present disclosure relates to an apparatus and method for proposing an inter-CU LTM execution procedure in a wireless communication system.

The present disclosure relates to an apparatus and method for transmitting and receiving information required for inter-CU LTM operation in a wireless communication system.

The present disclosure relates to an apparatus and method for instructing a terminal to change to a cell of a CU other than a serving CU in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method performed by a first control node of a first base station in a wireless communication system may include determining to initiate an L1/L2 Triggered Mobility (LTM) configuration initiation, and transmitting a first message related to a configuration of candidate cells for the LTM, wherein the candidate cells for the LTM include at least one cell belonging to at least one other base station, and the first message may be transmitted to a second control node of a second base station included in the at least one other base station.

As an example of the present disclosure, a method performed by a first distributed node of a first base station in a wireless communication system may include receiving a measurement report message from a terminal, and transmitting, to a first control node of the first base station, a message proposing an L1/L2 Triggered Mobility (LTM) based on the measurement report message, wherein the measurement report message includes an L1 measurement report message, and the LTM may include an inter-base station LTM.

As an example of the present disclosure, a method performed by a second control node of a second base station in a wireless communication system may include receiving, from a first control node of a first base station, a first message related to a configuration of candidate cells for an L1/L2 Triggered Mobility (LTM), performing, based on the first message, a configuration for the LTM for at least one candidate cell among the candidate cells, and transmitting, to the first control node, a second message including information related to the at least one candidate cell.

As an example of the present disclosure, a method performed by a terminal in a wireless communication system may include transmitting a measurement report message to a first distributed node of a first base station, and receiving a cell change message from the first distributed node, wherein the cell change message may indicate a cell change to a target cell belonging to a second distributed node of a second base station.

As an example of the present disclosure, a first control node of a first base station in a wireless communication system may include a transceiver, and a processor connected to the transceiver, wherein the processor is configured to determine an L1/L2 Triggered Mobility (LTM) configuration initiation, and control to transmit a first message related to a configuration of candidate cells for the LTM, wherein the candidate cells for the LTM include at least one cell belonging to at least one other base station, and the first message may be transmitted to a second control node of a second base station included in the at least one other base station.

As an example of the present disclosure, a first distributed node of a first base station in a wireless communication system may include a transceiver, and a processor connected to the transceiver, wherein the processor is configured to receive a measurement report message from a terminal, and control to transmit, to a first control node of the first base station, a message proposing an L1/L2 Triggered Mobility (LTM) based on the measurement report message, wherein the measurement report message includes an L1 measurement report message, and the LTM may include an inter-base station LTM.

As an example of the present disclosure, a second control node of a second base station in a wireless communication system may include a transceiver, and a processor connected to the transceiver, wherein the processor is configured to receive, from a first control node of a first base station, a first message related to a configuration of candidate cells for an L1/L2 Triggered Mobility (LTM), perform, based on the first message, a configuration for the LTM for at least one candidate cell among the candidate cells, and control to transmit, to the first control node, a second message including information related to the at least one candidate cell.

As an example of the present disclosure, a terminal in a wireless communication system may include a transceiver, and a processor connected to the transceiver, wherein the processor is configured to transmit a measurement report message to a first distributed node of a first base station, and control to receive a cell change message from the first distributed node, wherein the cell change message may indicate a cell change to a target cell belonging to a second distributed node of a second base station.

As an example of the present disclosure, a communication apparatus may include at least one processor, and at least one computer memory connected to the at least one processor and storing instructions that, when executed by the at least one processor, direct operations, wherein the operations may include determining an L1/L2 Triggered Mobility (LTM) configuration initiation, and transmitting a first message related to a configuration of candidate cells for the LTM, wherein the candidate cells for the LTM include at least one cell belonging to at least one other base station, and the first message may be transmitted to a second control node of a second base station included in the at least one other base station.

As an example of the present disclosure, a non-transitory computer-readable medium storing at least one instruction may include the at least one instruction executable by a processor, wherein the at least one instruction controls an apparatus to determine an L1/L2 Triggered Mobility (LTM) configuration initiation, and control to transmit a first message related to a configuration of candidate cells for the LTM, wherein the candidate cells for the LTM include at least one cell belonging to at least one other base station, and the first message may be transmitted to a second control node of a second base station included in the at least one other base station.

### ADVANTAGEOUS EFFECTS

The following effects may be achieved by embodiments based on the present disclosure.

The present disclosure can support L1/L2 Triggered Mobility (LTM) between different NG-RAN nodes in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5a and FIG. 5b illustrates an example of an inter-MN handover procedure with/without MN initiated SN change procedure.
FIG. 6 illustrates an example of a successful procedure of S-NG-RAN node addition preparation.
FIG. 7 illustrates an example of an unsuccessful procedure of S-NG-RAN node addition preparation.
FIG. 8 illustrates an example of an overall procedure for supporting LTM between different NG-RAN nodes according to an embodiment of the present disclosure.
FIG. 9a to FIG. 9c illustrate an example of an inter-CU LTM preparation and configuration procedure according to an embodiment of the present disclosure.
FIG. 10a and FIG. 10b illustrate an example of an early TA acquisition procedure according to an embodiment of the present disclosure.
FIG. 11a to FIG. 11c illustrate an example of an inter-CU LTM execution procedure according to an embodiment of the present disclosure.
FIG. 12 illustrates an example of a procedure for triggering LTM according to an embodiment of the present disclosure.
FIG. 13 illustrates an example of an LTM preparation procedure according to an embodiment of the present disclosure.
FIG. 14 illustrates an example of an LTM preparation procedure according to an embodiment of the present disclosure.
FIG. 15 illustrates an example of a cell change procedure according to an LTM configuration according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

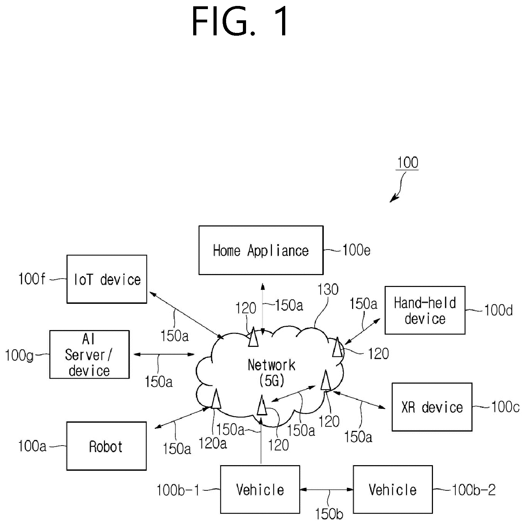

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

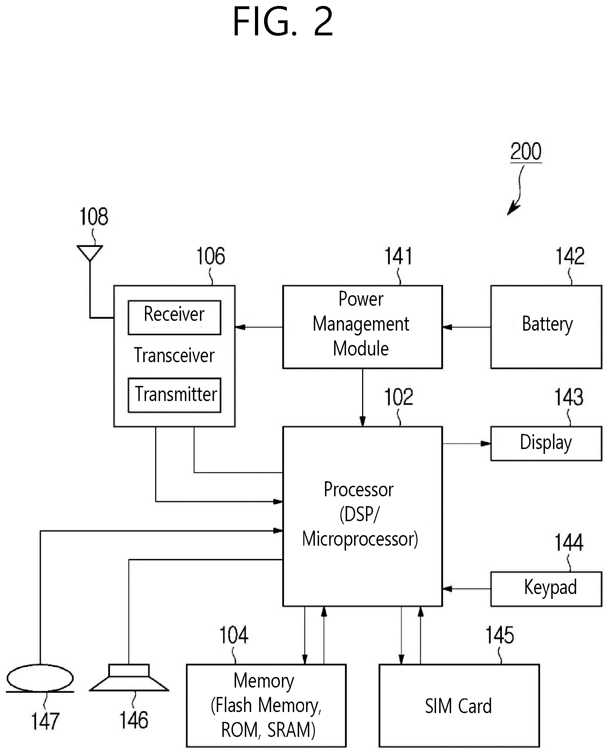

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

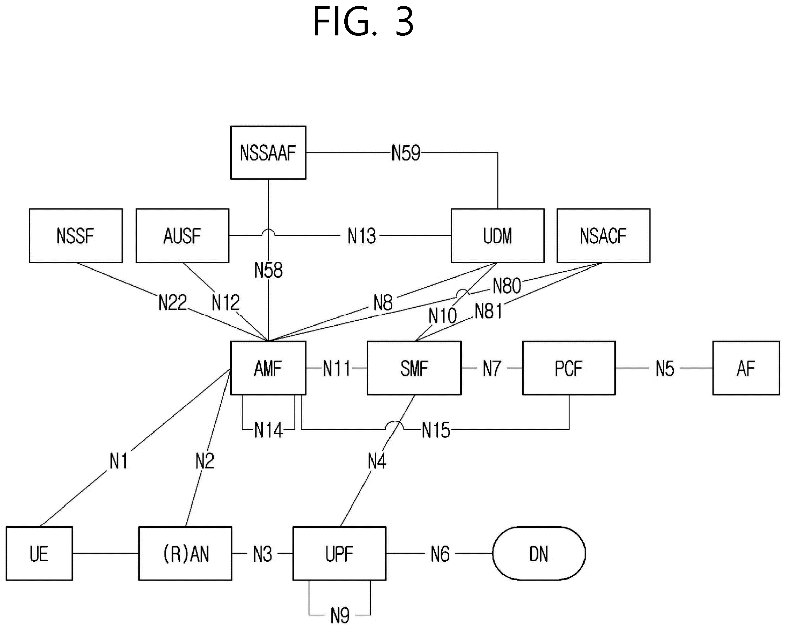

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

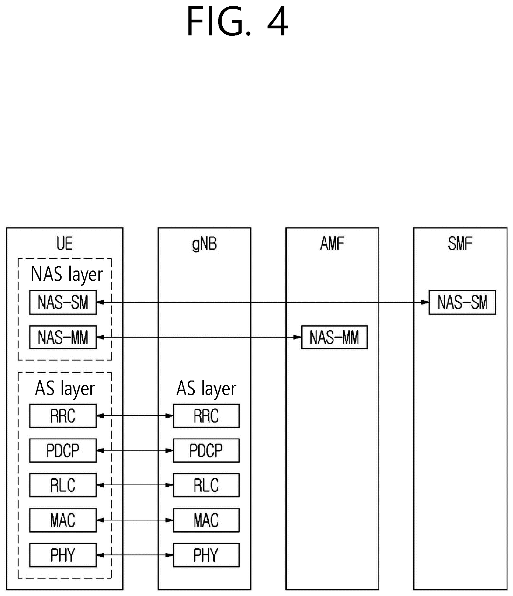

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

In the TS 37.340 specification document, MR-DC procedures are described as follows:

### 10.7.2 Multi-Radio Dual Connectivity (MR-DC) with 5GC

Inter-MN handover with/without MN initiated SN change is used to transfer UE context data from a source MN to a target MN while the UE context at the SN is kept or moved to another SN. During an inter-MN handover, the target MN decides whether to keep or change the SN (or release the SN, as described in clause 10.8). Only intra-RAT inter-MN handover with/without SN change is supported (e.g., no transition from NGEN-DC to NR-DC).

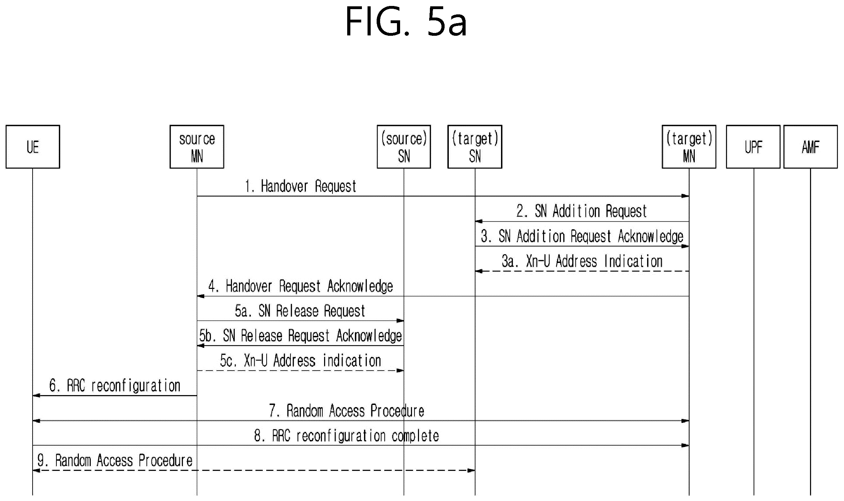

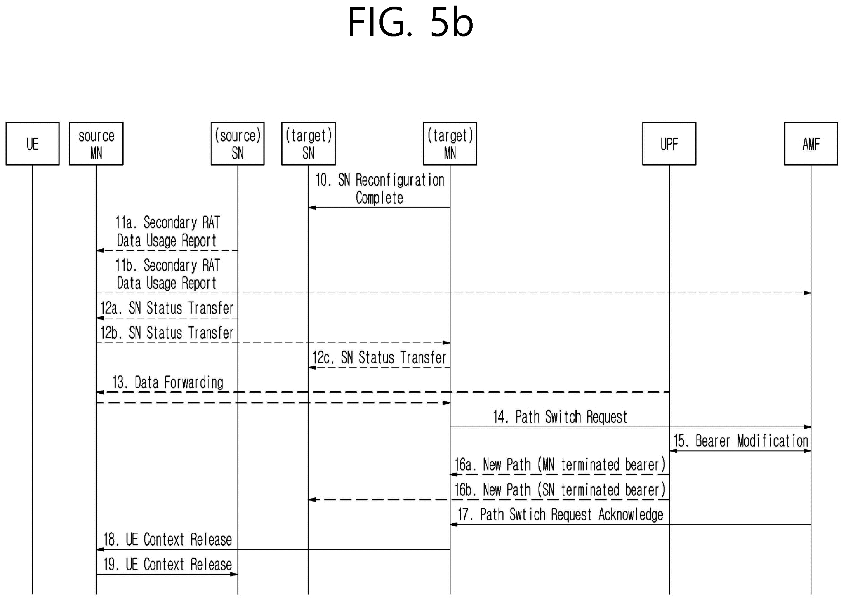

FIG. 5a and FIG. 5b illustrates an example of an inter-MN handover procedure with/without MN initiated SN change procedure.

NOTE 1: For an inter-Master Node handover without Secondary Node change, the source SN and the target SN shown in FIG. 5a and FIG. 5b are the same node.
1. The source MN starts the handover procedure by initiating the Xn handover preparation procedure including both MCG and SCG configuration. The source MN includes the source SN UE XnAP ID, SN ID and the UE context in the source SN in the handover request message.
   NOTE 2: The source MN may trigger the MN-initiated SN modification procedure (to the source SN) to retrieve the current SCG configuration and to allow provision of data forwarding related information before step 1.
2. If the target MN decides to keep the UE context in source SN, the target MN sends SN addition request to the SN including the SN UE XnAP ID as a reference to the UE context in the SN that was established by the source MN. If the target MN decides to change the SN allowing delta configuration, the target MN sends the SN addition request to the target SN including the UE context in the source SN that was established by the source MN. Otherwise, the target MN may send the SN addition request to the target SN including neither the SN UE XnAP ID nor the UE context in the source SN that was established by the source MN.
3. The (target) SN replies with SN addition request acknowledge. The (target) SN may include the indication of the full or delta RRC configuration.

NOTE 2a0: In CHO with SCG configuration, it is up to the target MN implementation to make sure that the CG-Config provided from the (target) SN can be used in all CHO preparations.

3a. For SN terminated bearers using MCG resources, the target MN provides Xn-U DL TNL address information in the Xn-U Address Indication message.

4. The target MN includes within the handover request acknowledge message the MN RRC reconfiguration message to be sent to the UE in order to perform the handover, and may also provide forwarding addresses to the source MN. If PDU session split is performed in the target side during handover procedure, more than one data forwarding addresses corresponding to each node are included in the handover request acknowledge message. The target MN indicates to the source MN that the UE context in the SN is kept if the target MN and the SN decided to keep the UE context in the SN in Step 2 and Step 3.

5a/5b. The source MN sends SN release request message to the (source) SN including a cause indicating MCG mobility. The (source) SN acknowledges the release request. The source MN indicates to the (source) SN that the UE context in SN is kept, if it receives the indication from the target MN. If the indication as the UE context kept in SN is included, the SN keeps the UE context.

5c. The source MN sends XN-U address indication message to the (source) SN to transfer data forwarding information. More than one data forwarding addresses may be provided if the PDU session is split in the target side.

6. The source MN triggers the UE to perform handover and apply the new configuration.

7/8. The UE synchronizes to the target MN and replies with MN RRC reconfiguration complete message.

9. If configured with bearers requiring SCG radio resources, the UE synchronizes to the (target) SN.

NOTE 2a1: The order the UE performs random access towards the MN (Step 7) and performs the random access procedure towards the SN (Step 9) is not defined.

10. If the RRC connection reconfiguration procedure was successful, the target MN informs the (target) SN via SN Reconfiguration Complete message.

11a. The source SN sends the secondary RAT data usage report message to the source MN and includes the data volumes delivered to and received from the UE over the NR/E-UTRA radio as described in clause 10.11.2.

NOTE 2a2: The order the source SN sends the secondary RAT data usage report message and performs data forwarding with MN/target SN is not defined. The SN may send the report when the transmission of the related QoS is stopped.

11b. The source MN sends the secondary RAT report message to AMF to provide information on the used NR/E-UTRA resource.

12. For bearers using RLC AM, the source MN sends the SN status transfer message to the target MN, including, if needed, SN status received from the source SN. The target forwards the SN Status to the target SN, if needed.

13. If applicable, data forwarding takes place from the source side. If the SN is kept, data forwarding may be omitted for SN terminated bearers or QoS flows kept in the SN.

14-17. The target MN initiates the path switch procedure. If the target MN includes multiple DL TEIDs for one PDU session in the path switch request message, multiple UL TEID of the UPF for the PDU session should be included in the path switch acknowledge message in case there is TEID update in UPF.

NOTE 3: If new UL TEIDs of the UPF for SN are included, the target MN performs MN initiated SN modification procedure to provide them to the SN.

18. The target MN initiates the UE context release procedure towards the source MN.

19. Upon reception of the UE context release message from source MN, the (source) SN releases C-plane related resources associated to the UE context towards the source MN. Any ongoing data forwarding may continue. The SN shall not release the UE context associated with the target MN if the UE contest kept indication was included in the SN release request message in Step 5.

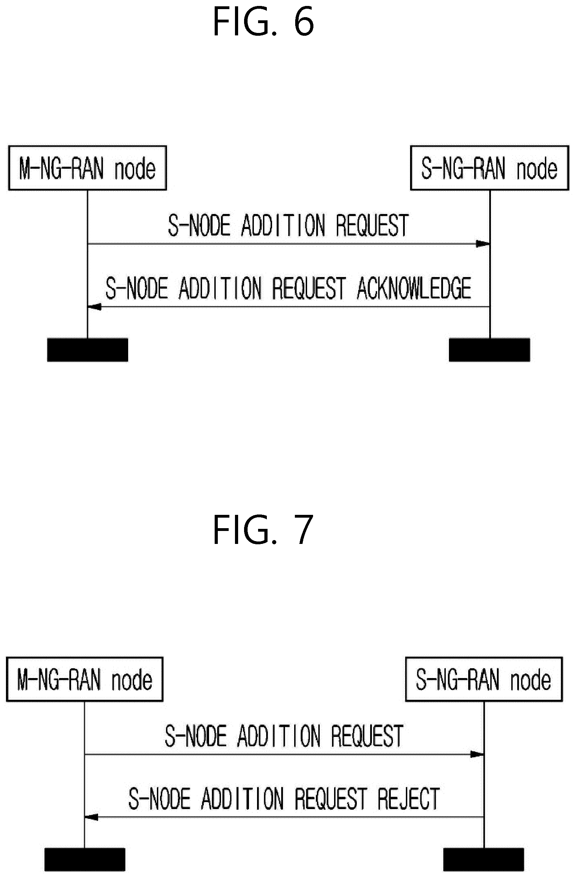

FIG. 6 illustrates an example of a successful procedure of S-NG-RAN node addition preparation, and FIG. 7 illustrates an example of an unsuccessful procedure of S-NG-RAN node addition preparation. S-NG-RAN node addition preparation is defined in the TS 38.423 specification document and is described as follows.

### 8.3.1 S-NG-RAN node addition preparation

### 8.3.1.1 General

The purpose of the S-NG-RAN node addition preparation procedure is to request the S-NG-RAN node to allocate resources for dual connectivity operation for a specific UE.

The procedure uses UE-associated signaling.

### 8.3.1.2 Successful operation

The M-NG-RAN node initiates the procedure by sending the S-NODE addition request message to the S-NG-RAN node.

When the M-NG-RAN node sends the S-NODE addition request message, it shall start the timer TXn.

The allocation of resources according to the values of the Allocation and Retention Priority IE included in the QoS Flow Level QoS Parameters IE for each QoS flow shall follow the principles specified for the PDU Session Resource Setup procedure in TS 38.413 [5].

The S-NG-RAN node shall choose the ciphering algorithm based on the information in the UE Security Capabilities IE and locally configured priority list of AS encryption algorithms and apply the key indicated in the S-NG-RAN node Security Key IE as specified in TS 33.501 [28].

If the TSC Traffic Characteristics IE is included for a QoS flow in the S-NODE addition request message, the S-NG-RAN node shall behave the same as the NG-RAN node in the PDU session resource Setup procedure, specified in TS 38.413 [5].

If the Additional QoS Flow Information IE is included for a QoS flow in the S-NODE addition request message, the S-NG-RAN node shall behave the same as the NG-RAN node in the PDU session resource setup procedure, specified in TS 38.413 [5].

For each GBR QoS flow, if the Alternative QoS Parameters Sets IE is included in the GBR QoS Flow Information IE, the S-NG-RAN node shall, if supported, behave the same as the NG-RAN node in the PDU Session Resource Setup procedure specified in TS 38.413 [5].

For each PDU session, if the Network Instance IE is included in the PDU Session Resource Setup Info - SN terminated IE contained in the PDU Session Resources To Be Added List IE and the Common Network Instance IE is not present, the S-NG-RAN node shall, if supported, use it when selecting transport network resource as specified in TS 23.501 [7].

For each GBR QoS flow, if the Offered GBR QoS Flow Information IE is included in the QoS Flows To Be Setup List IE contained in the PDU Session Resource Setup Info - SN terminated IE, the S-NG-RAN node may request the M-NG-RAN node to configure the DRB to which that QoS flow is mapped with MCG resources.

For each PDU session, if the Non-GBR Resources Offered IE is included in the PDU Session Resource Setup Info - SN terminated IE contained in the PDU Session Resources To Be Added List IE and set to "true", the S-NG-RAN node may request the M-NG-RAN node to configure DRBs to which non-GBR QoS flows of the PDU session are mapped with MCG resources.

For each PDU session, if the Common Network Instance IE is included in the PDU Session Resource Setup Info - SN terminated IE contained in the PDU Session Resources To Be Added List IE, the S-NG-RAN node shall, if supported, use it when selecting transport network resource as specified in TS 23.501 [7].

### Redundant transmission:

- For each PDU session, if the Redundant UL NG-U UP TNL Information at UPF IE is included in the PDU Session Resource Setup Info - SN terminated IE, the S-NG-RAN node shall, if supported, use it as the uplink termination point for the user plane data for this PDU session for the redundant transmission and it shall include the Redundant DL NG-U UP TNL Information at NG-RAN IE in the PDU Session Resource Setup Response Info - SN terminated IE as described in TS 23.501 [7].
- For each PDU session, if the Redundant Common Network Instance IE is included in the PDU Session Resource Setup Info - SN terminated IE the S-NG-RAN node shall, if supported, use it when selecting transport network resource for the redundant transmission as specified in TS 23.501 [7].
- For each PDU session for which the Redundant QoS Flow Indicator IE is include in QoS Flows To Be Setup List IE contained in the S-NODE addition request message, the S-NG-RAN node shall, if supported, store and use it as specified in TS 23.501 [7].
- For each PDU session, if the Redundant PDU Session Information IE is included in the PDU Session Resource Setup Info - SN terminated IE in the S-NODE addition request message, the S-NODE-RAN node shall, if supported, store the received information in the UE context and setup the redundant user plane resources for the concerned PDU session, as specified in TS 23.501 [7].
- For each PDU session resource successfully setup for which the Redundant PDU Session Information IE is included in the S-NODE addition request message, the S-NG-RAN node shall, if supported, include the Used RSN Information IE in the PDU Session Resource Setup Response Info - SN terminated IE in the S-NODE addition request acknowledge message. If the PDU Session Pair ID IE is included in the Redundant PDU Session Information IE, the S-NG-RAN node may store and use it to identify the paired PDU sessions.

If the S-NODE addition request message contains the Selected PLMN IE, the S-NG-RAN node may use it for RRM purposes.

If the S-NODE addition request message contains the Expected UE Behaviour IE, the S-NG-RAN node shall, if supported, store this information and may use it to optimize resource allocation.

If the S-NODE addition request message contains the Mobility Restriction List IE, the S-NG-RAN node, if supported, shall store this information and use it to select an appropriate SCG.

If the S-NODE addition request message contains the Index to RAT/Frequency Selection Priority IE, the S-NG-RAN node may use it for RRM purposes.

If the S-NG-RAN node is a gNB and the S-NODE addition request message contains the PCell ID IE, the S-NG-RAN node shall search for the target NR cell among the NR neighbour cells of the PCell indicated, as specified in the TS 37.340 [8].

If the S-NODE addition request message contains the S-NG-RAN node PDU Session Aggregate Maximum Bit Rate IE, the S-NG-RAN node may use it for RRM purposes.

If the S-NODE addition request message contains the MR-DC Resource Coordination Information IE, the S-NG-RAN node should forward it to lower layers and it may use it for the purpose of resource coordination with the M-NG-RAN node, or to coordinate with sidelink resources used in the M-NG-RAN node. The S-NG-RAN node shall consider the value of the received UL Coordination Information IE valid until reception of a new update of the IE for the same UE. The S-NG-RAN node shall consider the value of the received DL Coordination Information IE valid until reception of a new update of the IE for the same UE.

If the E-UTRA Coordination Assistance Information IE or the NR Coordination Assistance Information IE is contained in the MR-DC Resource Coordination Information IE, the S-NG-RAN node shall, if supported, use the information to determine further coordination of resource utilisation between the S-NG-RAN node and the M-NG-RAN node.

If the S-NODE addition request message contains the NE-DC TDM Pattern IE, the S-NG-RAN node should forward it to lower layers and use it for the purpose of single uplink transmission. The S-NG-RAN node shall consider the value of the received NE-DC TDM Pattern IE valid until reception of a new update of the IE for the same UE.

If the S-NODE addition request message contains the QoS Flow Mapping Indication IE, the S-NG-RAN node may take it into account that only the uplink or downlink QoS flow is mapped to the DRB.

For each bearer for which allocation of the PDCP entity is requested at the S-NG-RAN node:
- the M-NG-RAN node may propose to apply forwarding of downlink data by including the DL Forwarding IE within PDU Session Resource Setup Info - SN terminated IE of the S-NODE addition request message. For each bearer that it has decided to admit, the S-NG-RAN node may include the DL Forwarding GTP Tunnel Endpoint IE within the PDU Session Resource Setup Response Info - SN terminated IE of the S-NODE addition request acknowledge message to indicate that it accepts the proposed forwarding of downlink data for this bearer.
- the S-NG-RAN node may include for each bearer in the PDU Session Resource Setup Response Info - SN terminated IE the UL Forwarding GTP Tunnel Endpoint IE to indicates it request data forwarding of uplink packets to be performed for that bearer.
- the M-NG-RAN node shall include RLC Mode IE for each bearer offloaded from M-NG-RAN node to S-NG-RAN node in the DRBs to QoS Flow Mapping List IE within the PDU Session Resource Setup Info - SN terminated IE of the S-NODE addition request message, and the RLC Mode IE indicates the mode that the M-NG-RAN used for the DRB when it was hosted at the M-NG-RAN node.

For each bearer for which the PDCP entity is at the M-NG-RAN node:
- the M-NG-RAN node shall include the RLC mode IE for each bearer in the DRBs To Be Setup List IE within the PDU Session Resource Setup Info - MN terminated IE of the S-NODE addition request message to indicate the RLC mode has been configured at the M-NG-RAN node, so that the S-NG-RAN node shall configure the same RLC mode for this MN terminated split bearer.

The M-NG-RAN node may also propose to apply forwarding of UL data when offloading QoS flows for which inorder delivery is requested by including the UL Forwarding Proposal IE in the Data Forwarding and Offloading Info from source NG-RAN node IE within the PDU Session Resource Setup Info - SN terminated IE of the S-NODE addition request message. The S-NG-RAN node may include the PDU Session Level UL Data Forwarding UP TNL Information IE in the Data Forwarding Info from target NG-RAN node IE within the PDU Session Resource Setup Response Info - SN terminated IE of the S-NODE addition request acknowledge message to indicate that it accepts the proposed forwarding.

If the Masked IMEISV IE is contained in the S-NODE addition request message, the S-NG-RAN node shall, if supported, use it to determine the characteristics of the UE for subsequent handling.

If the UE Radio Capability ID IE is contained in the S-NODE addition request message, the S-NG-RAN node shall, if supported, store this information in the UE context and use it as defined in TS 23.501 [7] and TS 23.502 [13].

The S-NG-RAN node shall report to the M-NG-RAN node, in the S-NODE addition request acknowledge message, the result for all the requested PDU session resources in the following way:
- A list of PDU session resources which are successfully established shall be included in the PDU Session Resources Admitted To Be Added List IE.
- A list of PDU session resources which failed to be established shall be included in the PDU Session Resources Not Admitted List IE.

Upon reception of the S-NODE addition request acknowledge message, the M-NG-RAN node shall stop the timer TXn_{DCprep}.

If the S-NODE addition request acknowledge message contains the MR-DC Resource Coordination Information IE, the M-NG-RAN node may use it for the purpose of resource coordination with the S-NG-RAN node. The M-NG-RAN node shall consider the value of the received UL Coordination Information IE valid until reception of a new update of the IE for the same UE. The M-NG-RAN node shall consider the value of the received DL Coordination Information IE valid until reception of a new update of the IE for the same UE. If the E-UTRA Coordination Assistance Information IE or the NR Coordination Assistance Information IE is contained in the MR-DC Resource Coordination Information IE, the M-NG-RAN node shall, if supported, use the information to determine further coordination of resource utilisation between the M-NG-RAN node and the S-NG-RAN node.

The S-NG-RAN node may include for each bearer in the DRBs To Be Setup List IE in the S-NODE addition request acknowledge message the PDCP SN Length IE to indicate the PDCP SN length for that DRB.

If the S-NG-RAN node UE XnAP ID IE is contained in the S-NODE addition request message, the S-NG-RAN node shall, if supported, store this information and use it as defined in TS 37.340 [8].

If the S-NODE addition request message contains the PDCP SN Length IE, the S-NG-RAN node shall, if supported, store this information and use it for lower layer configuration of the concerned MN terminated bearer.

If the S-NODE addition request message contains the SN Addition Trigger Indication IE, the S-NG-RAN node shall include the RRC config indication IE in the S-NODE addition request acknowledge message to inform the M-NG-RAN node if the S-NG-RAN node applied full or delta configuration, as specified in TS 37.340 [8].

If the S-NODE addition request message contains the S-NG-RAN node Maximum Integrity Protected Data Rate Uplink IE or the S-NG-RAN node Maximum Integrity Protected Data Rate Downlink IE, the S-NG-RAN node shall use the received information when enforcing the maximum integrity protected data rate for the UE.

If the Security Indication IE is included in the PDU Session Resource Setup Info - SN terminated IE of the S-NODE addition request message, the behaviour of the S-NG-RAN node shall be the same as specified for the same IE in the PDU Session Resources To Be Setup List IE in the Handover Preparation procedure, for the concerned PDU session, and the S-NG-RAN node shall include the Security Result IE in the PDU Session Resource Setup Response Info - SN terminated IE.

If the Security Result IE is included in the PDU Session Resource Setup Info - SN terminated IE of the S-NODE addition request message, the S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE.

The S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE. If the S-NG-RAN node is an ng-eNB, it shall reject all PDU sessions for which the Integrity Protection Indication IE is set to "required" as specified in TS 33.501 [28]. If either the S-NG-RAN node or the M-NG-RAN node is an ng-eNB, the S-NG-RAN node shall behave according to clause 6.10.4 of TS 33.501 [28] for PDU sessions for which the Integrity Protection Indication IE is set to "preferred".

The S-NG-RAN node may include the Location Information at S-NODE IE in the S-NODE addition request acknowledge message, if respective information is available at the S-NG-RAN node.

If the Location Information at S-NODE Reporting IE set to "pscell" is included in the S-NODE addition request, the S-NG-RAN node shall, start providing information about the current location of the UE. If the Location Information at S-NODE IE is included in the S-NODE addition request acknowledge, the M-NG-RAN node shall store the included information so that it may be transferred towards the AMF.

If the Default DRB Allowed IE is included in the PDU Session Resource Setup Info - SN terminated IE of the S-NODE addition request message and set to "true", the S-NG-RAN node may configure the default DRB for the PDU session.

If the S-NODE addition request acknowledge message includes the DRB IDs taken into use IE, the M-NG-RAN node, if applicable, shall act as specified in TS 37.340 [8].

If Trace Activation IE has previously been received for this UE, it shall be included in the S-NODE addition request message. If the Trace Activation IE is included in the S-NODE addition request message, the S-NG-RAN node shall, if supported, initiate the requested trace function as described in TS 32.422 [23].

If the Trace Activation IE is included in the S-NODE addition request message which includes
- the MDT Activation IE set to "Immediate MDT and Trace", then the S-NG-RAN node shall if supported, initiate the requested trace session and MDT session as described in TS 32.422 [23].
- the MDT Activation IE set to "Immediate MDT Only", the S-NG-RAN node shall, if supported, initiate the requested MDT session as described in TS 32.422 [23] and the S-NG-RAN node shall ignore the Interfaces To Trace IE, and the Trace Depth IE.
- the MDT Location Information IE, within the MDT Configuration IE, the S-NG-RAN node shall, if supported, store this information and take it into account in the requested MDT session.
- the MDT Activation IE set to "Immediate MDT Only", and if the Signaling based MDT PLMN List IE is included in the MDT Configuration IE, the S-NG-RAN node may use it to propagate the MDT Configuration as described in TS 37.320 [43].
- the Bluetooth Measurement Configuration IE, within the MDT Configuration IE, the S-NG-RAN node shall, if supported, take it into account for MDT Configuration as described in TS 37.320 [43].
- the WLAN Measurement Configuration IE, within the MDT Configuration IE, the S-NG-RAN node shall, if supported, take it into account for MDT Configuration as described in TS 37.320 [43].
- the Sensor Measurement Configuration IE, within the MDT Configuration IE, the S-NG-RAN node shall take it into account for MDT Configuration as described in TS 37.320 [43].
- the MDT Configuration IE and if the S-NG-RAN node is a gNB at least the MDT Configuration-NR IE shall be present, while if the S-NG-RAN Node is an ng-eNB at least the MDT Configuration-EUTRA IE shall be present.

If the Requested Fast MCG recovery via SRB3 IE set to "true" is included in the S-NODE addition request message and the S-NG-RAN node decides to configure fast MCG link recovery via SRB3 as specified in TS 37.340 [8], the S-NG-RAN node shall, if supported, include the Available fast MCG recovery via SRB3 IE set to "true" in the S-NODE addition request acknowledge message.

If the QoS Monitoring Request IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it to configure lower layers for the purpose of delay measurement and QoS monitoring as specified in TS 23.501 [7]. If the QoS Monitoring Reporting Frequency IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it for RAN part delay reporting.

For each QoS flow which has been successfully established in the S-NG-RAN node, if the QoS Monitoring Request IE was included in the QoS Flow Level QoS Parameters IE contained in the PDU Session Resource Setup Info - SN terminated IE, the S-NG-RAN node shall store this information, and shall, if supported, perform delay measurement and QoS monitoring as specified in TS 23.501 [7]. If the QoS Monitoring Reporting Frequency IE was included in the QoS Flow Level QoS Parameters IE contained in the PDU Session Resource Setup Info - SN terminated IE, the S-NG-RAN node shall store this information, and shall, if supported, use it for RAN part delay reporting. In case such a QoS flow is included in the DRBs To Be Setup List IE of the PDU Session Resource Setup Response Info - SN terminated IE, the M-NG-RAN node shall, if supported, use it to configure lower layers for the purpose of delay measurement and QoS monitoring. If the QoS Monitoring Reporting Frequency IE is included in the DRBs To Be Setup List IE of the PDU Session Resource Setup Response Info - SN terminated IE, the M-NG-RAN node shall, if supported, use it for RAN part delay reporting.

For each DRB configured as MN-terminated split bearer/SCG bearer, if the QoS Mapping Information IE is included in the DRBs Admitted List IE in the PDU Session Resource Setup Response Info - MN terminated IE of the S-NODE addition request acknowledge message, the M-NG-RAN node shall, if supported, use it to set DSCP and/or IPv6 flow label fields for the downlink IP packets which are transmitted from M-NG-RAN node to S-NG-RAN node through the GTP tunnels indicated by the UP Transport Layer Information IE.

If the Source NG-RAN Node ID IE is included in the S-NODE addition request message, the S-NG-RAN node shall, if supported, use it to decide the direct data path availability with the indicated source NG-RAN node, and if the direct data forwarding path is available, include the Direct Forwarding Path Availability IE in the S-NODE addition request acknowledge message.

If for a given QoS Flow the Source DL Forwarding IP Address IE or both, the Source DL Forwarding IP Address IE and the Source Node DL Forwarding IP Address IE are included within the Data Forwarding and Offloading Info from source NG-RAN node IE in the PDU Session Resource Setup Info - SN terminated IE contained in the S-NODE addition request message, the S-NG-RAN node shall, if supported, store this information and use it as part of its ACL functionality configuration actions, if such ACL functionality is deployed.

If for a given QoS Flow the Source DL Forwarding IP Address IE is included within the QoS Flows Mapped To DRB List IE in the PDU Session Resource Setup Response Info - SN terminated IE contained in the S-NODE addition request acknowledge message, the M-NG-RAN node shall, if supported, store this information and use it as part of its ACL functionality to identify source TNL address for data forwarding in case of subsequent handover preparation, if such ACL functionality is deployed.

If the Management Based MDT PLMN List IE is contained in the S-NODE addition request message, the S-NG-RAN node shall, if supported, store the received information in the UE context, and use this information to allow subsequent selection of the UE for management based MDT defined in TS 32.422 [23].

Upon reception of the S-NODE addition request message, the S-NG-RAN node shall, if supported, start collecting SCG information and continue for as long as the UE stays in one of its cells.

If the UE History Information from the UE IE is included in the S-NODE addition request message, the S-NG-RAN node shall, if supported, store this information.

If the PSCell Change History IE set to "reporting full history" is included in the S-NODE addition request message, the S-NG-RAN node shall, if supported, signal the latest SCG UE History Information upon each PSCell change, to the M-NG-RAN node, using the S-NG-RAN node initiated S-NG-RAN node Modification procedure.

If the IAB Node Indication IE is contained in the S-NODE addition request message, the S-NG-RAN node shall, if supported, consider that dual connectivity operation is requested for an IAB-node. In addition:
- If the No PDU Session Indication IE is contained in the S-NODE addition request message, the S-NG-RAN node shall, if supported, consider the UE as an IAB-node which does not have any PDU sessions activated, and ignore the PDU Session Resources To Be Added List IE, and shall not take any action with respect to PDU session setup. Subsequently, the M-NG-RAN node shall, if supported, ignore the PDU Session Resources Admitted To Be Added List IE in the S-NODE addition request acknowledge message.
- If the F1-terminating IAB-donor Indicator IE is contained in the S-NODE addition request message, the S-NG-RAN node shall, if supported, assume that it will become the F1-terminating IAB-donor of the IAB-node, and act as described in TS 38.401 [2].

If the CHO Information SN Addition IE is included in the S-NODE addition request message, the S-NG-RAN node shall consider that the S-NG-RAN node addition preparation procedure has been triggered as part of a conditional handover. It may use the Source M-NG-RAN node ID IE and the Source M-NG-RAN node UE XnAP ID IE to identify other active S-NG-RAN node addition preparations related to this UE. If the Estimated Arrival Probability IE is contained in the CHO Information SN Addition IE included in the S-NODE addition request message, then the S-NG-RAN node may use the information to allocate necessary resources for the UE.

If the SCG Activation Request IE is included in the S-NODE addition request message, the S-NG-RAN node may use it to configure SCG resources as specified in TS 37.340 [8], and shall, if supported, include the SCG Activation Status IE in the S-NODE addition request acknowledge message. If the SCG Activation Request IE in the S-NODE addition request message is set to "Activate SCG", the S-NG-RAN node shall, if supported, activate the SCG resources and set the SCG Activation Status IE in the S-NODE addition request acknowledge message to "SCG activated".

If the Conditional PSCell Addition Information Request IE is included in the S-NODE addition request message, the S-NG-RAN node shall, if supported, consider that the request concerns CPAC, as described in TS 37.340 [8]. Accordingly, the S-NG-RAN node shall, if supported, include the Conditional PSCell Addition Acknowledge IE in the S-NODE addition request acknowledge message.

If the Conditional PSCell Addition Information Acknowledge is included in the S-NODE addition request acknowledge message, the M-NG-RAN node shall, if supported, shall, if supported, consider the indicated PSCells are selected by the target SN as candidate PSCells for CPAC.

If the CG-CandidateList is included in the S-NG-RAN node to M-NG-RAN node Container IE in the S-NODE addition request acknowledge message, the M-NG-RAN node shall, if supported, use it for the purpose of CPAC.

If the Estimated Arrival Probability IE is contained in the Conditional PSCell Addition Information Request IE included in the S-NODE addition request message, then the candidate target S-NG-RAN node may use the information to allocate necessary resources for the incoming CPAC procedure.

If the S-NG-RAN node UE Slice Maximum Bit Rate IE for a specific S-NSSAI is included in the S-NODE addition request message, the S-NG-RAN node shall, if supported, store and use the received S-NG-RAN node UE Slice Maximum Bit Rate for all PDU sessions associated with the S-NSSAI for the concerned UE as defined in TS 23.501 [7].

Interactions with the S-NG-RAN node Reconfiguration Completion procedure:
If the S-NG-RAN node admits at least one PDU session resource, the S-NG-RAN node shall start the timer TXn when sending the S-NODE addition request acknowledge message to the M-NG-RAN node except for a CPAC request. The reception of the S-NODE reconfiguration complete message shall stop the timer TXn_{DCoverall} if TXn_{DCoverall} is running.

Interaction with the Activity Notification procedure
Upon receiving an S-NODE addition request message containing the Desired Activity Notification Level IE, the S-NG-RAN node shall, if supported, use this information to decide whether to trigger subsequent Activation Notification procedures according to the requested notification level.

### 8.3.1.3 Unsuccessful operation

If the S-NG-RAN node is not able to accept any of the bearers or a failure occurs during the S-NG-RAN node addition preparation, the S-NG-RAN node sends the S-NODE addition request reject message with an appropriate cause value to the M-NG-RAN node.

### 8.3.1.4 Abnormal conditions

If the S-NG-RAN node receives an S-NODE addition request message containing in a PDU Session Resource To Be Added Item IE neither the PDU Session Resource Setup Info - SN terminated IE nor the PDU Session Resource Setup Info - MN terminated IE, the S-NG-RAN node shall fail the S-NG-RAN node addition preparation procedure indicating an appropriate cause.

If the supported algorithms for encryption defined in the NR Encryption Algorithms IE in the NR UE Security Capabilities IE, plus the mandated support of NEA0 in all UEs (TS 33.501 [28]), do not match any algorithms defined in the configured list of allowed encryption algorithms in the S-NG-RAN node (TS 33.501 [28]), the S-NG-RAN node shall reject the procedure using the S-NODE addition request reject message.

If the supported algorithms for integrity defined in the NR Integrity Protection Algorithms IE in the NR UE Security Capabilities IE do not match any algorithms defined in the configured list of allowed integrity protection algorithms in the S-NG-RAN node (TS 33.501 [28]), the S-NG-RAN node shall reject the procedure using the S-NODE addition request reject message.

If the S-NG-RAN node receives an S-NODE addition request message containing a S-NG-RAN node UE XnAP ID IE that does not match any existing UE Context that has such ID, the S-NG-RAN node shall reject the procedure using the S-NODE addition request reject message.

If the M-NG-RAN node receives an S-NODE addition request acknowledge message containing a value for PDU Session ID in PDU Session Resources Admitted List IE and in PDU Session Resources Not Admitted List IE, the M-NG-RAN node shall regard setup of S-NG-RAN node resources of that PDU Session as being failed.

If the S-NG-RAN node receives an S-NODE addition request message containing, for a PDU session, a PDU Session Resource Setup Info - SN terminated IE for which the Split Session Indicator IE is included and set to "split", the Security Result IE is not included, and either the Integrity Protection Indication IE or the Confidentiality Protection Indication IE is set to "preferred", it shall reject the PDU session.

Interaction with the M-NG-RAN node initiated S-NG-RAN node Release procedure:
If the M-NG-RAN node receives an S-NODE ADDITION REQUEST ACKNOWLEDGE message containing in a PDU Session Resource Admitted To Be Added Item IE neither the PDU Session Resource Setup Response Info - SN terminated IE nor the PDU Session Resource Setup Response Info - MN terminated IE, the M-NG-RAN node shall trigger the M-NG-RAN node initiated S-NG-RAN node Release procedure indicating an appropriate cause.

If the timer TXn_{DCprep} expires before the M-NG-RAN node has received the S-NODE addition request acknowledge message, the M-NG-RAN node shall regard the S-NG-RAN node Addition Preparation procedure as being failed and shall trigger the M-NG-RAN node initiated S-NG-RAN node Release procedure.

Interactions with the S-NG-RAN node Reconfiguration Completion and S-NG-RAN node initiated S-NG-RAN node release procedure:
If the timer TXn_{DCoverall} expires before the S-NG-RAN node has received the S-NODE reconfiguration complete or the S-NODE release request message, the S-NG-RAN node shall regard the requested RRC connection reconfiguration as being not applied by the UE and shall trigger the S-NG-RAN node initiated S-NG-RAN node release procedure.

### Specific Embodiments of the Present Disclosure

The present disclosure is for supporting L1/L2 Triggered Mobility (LTM) handover in a wireless communication system. Specifically, the present disclosure relates to an apparatus and method for supporting handover for inter-Centralized Unit (CU) LTM in a wireless communication system.

According to the network mobility enhancement study work item (WI) of Rel-18, the following has been documented to support LTM for reducing latency, overhead, and interruption time during serving cell change.

### 3. Justification

When the UE moves from the coverage area of one cell to another cell, at some point a serving cell change needs to be performed. Currently serving cell change is triggered by L3 measurements and is done by RRC signalling triggered Reconfiguration with Synchronisation for change of PCell and PSCell, as well as release add for SCells when applicable. All cases involve complete L2 (and L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time.

In Rel-17 Conditional PSCell change (CPC)/Conditional PSCell addition (CPA), a CPC/CPA-configured UE has to release the CPC/CPA configurations when completing random access towards the target PSCell. Hence the UE doesn't have a chance to perform subsequent CPC/CPA without prior CPC/CPA reconfiguration and re-initialization from the network. This will increase the delay for the cell change and increase the signaling overhead, especially in the case of frequent SCG changes when operating FR2. Therefore, MR-DC with selective activation of cell groups aims at enabling subsequent CPC/CPA after SCG change, without reconfiguration and re-initialization on the CPC/CPA preparation from the network. This results in a reduction of the signalling overhead and interrupting time for SCG change.

Currently, CHO and MR-DC cannot be configured simultaneously. This limits the usefulness of these two features when MR-DC is configured. If it is not completed in Rel-17, Rel-18 should specify mechanisms for CHO and MR-DC to be configured simultaneously. However, this alone may not be sufficient to optimise MR-DC mobility, as the radio link quality of the conditionally-configured PSCell may not be good enough or may not be the best candidate PSCell when the UE accesses the target PCell, and this may impact the UE throughput. To mitigate this throughput impact, Rel-18 CHO+MRDC can consider CHO including target MCG and multiple candidate SCGs for CPC/CPA.

### 4. Objective

### 4.1 Objective of SI or Core part WI or Testing part WI

The detailed objective of this work item are:
1. To specify mechanism and procedures of L1/L2 based inter-cell mobility for mobility latency reduction:
   - Configuration and maintenance for multiple candidate cells to allow fast application of configurations for candidate cells [RAN2, RAN3]
      ∘Dynamic switch mechanism among candidate serving cells (including SpCell and SCell) for the potential applicable scenarios based on L1/L2 signalling [RAN2, RAN1]
      ∘ L1 enhancements for inter-cell beam management, including L1 measurement and reporting, and beam indication [RAN1, RAN2]
   - Note 1: Early RAN2 involvement is necessary, including the possibility of further clarifying the interaction between this bullet with the previous bullet
   - Note 2: Only SSB-based L1 measurement is supported in this release.
      o Timing Advance management [RAN1, RAN2]
      o CU-DU interface signaling to support L1/L2 mobility, if needed [RAN3]
      Note 3: FR2 specific enhancements are not precluded, if any.
      Note 4: The procedure of L1/L2 based inter-cell mobility are applicable to the following scenarios:
   - Standalone, CA and NR-DC case with serving cell change within one CG, prioritizing MCG
   - Intra-DU case and intra-CU inter-DU case (applicable for Standalone and CA: no new RAN interfaces are expected)
   - Both intra-frequency and inter-frequency
   - Both FR1 and FR2
   - Source and target cells may be synchronized or non-synchronized

To achieve a fast serving cell change, early DL/UL synchronization prior to cell switch and LTM handover based on L1 measurement report triggered by MAC CE have been defined.

The LTM scenario of Rel-18 was limited to the intra-CU case, i.e., the case where a serving cell change occurs among cells belonging to a single CU. However, a serving cell change may also occur across multiple NG-RAN nodes. Accordingly, the present disclosure proposes mechanisms for supporting LTM between different NG-RAN nodes, i.e., inter-CU LTM.

In the following description, a Centralized Unit (CU) is a logical node hosting RRC, SDAP, and/or PDCP protocols, and a Distributed Unit (DU) is a logical node hosting RLC, MAC, and/or PHY layers. A DU is controlled by a CU connected via an F1 interface and supports at least one cell.

A Source-CU (S-CU) is the CU of the NG-RAN node currently serving the UE, and a Source-DU (S-DU) is the DU connected to the S-CU via an F1 interface and managing the current UE serving cell. A Candidate-CU (C-CU) is the CU of a candidate NG-RAN node other than the NG-RAN node currently serving the UE, and a Candidate-DU (C-DU) is the DU connected to the C-CU via an F1 interface and managing at least one candidate cell among the candidate cells for the UE. The S-CU and C-CU are connected via an X2 or Xn interface.

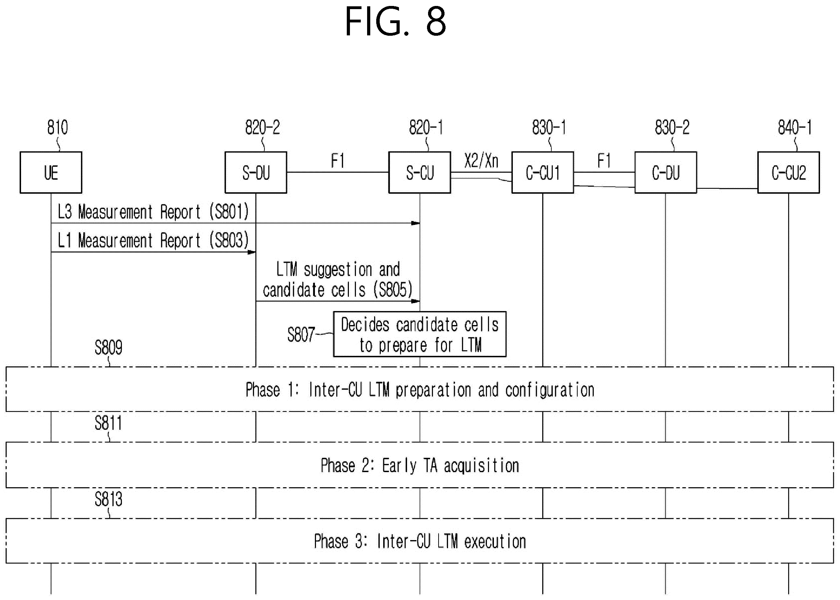

FIG. 8 illustrates an example of an overall procedure for supporting LTM between different NG-RAN nodes according to an embodiment of the present disclosure.

Referring to FIG. 8, in step S801, a UE 810 transmits an L3 measurement report message to an S-CU 820-1. In step S803, the UE 810 transmits an L1 measurement report message to an S-DU 820-2. The L3 measurement report message and/or the L1 measurement report message may include measurement results for neighboring cells. In step S805, the S-DU 820-2 suggests LTM for the UE and suggests candidate cells to the S-CU 820-1 based on the received L1 measurement report message. The candidate cells may be determined based on the L1 measurement report message. Depending on the embodiment, step S801 may be omitted, or steps S803 and S805 may be omitted. For example, the S-CU 820-1 may receive an L3 measurement report message, or may receive an LTM suggestion based on an L1 measurement report message from the S-DU 820-2.

In step S807, the S-CU 820-1 determines candidate cells for LTM preparation. The S-CU 820-1 may decide to initiate LTM configuration based on an L3 measurement report message from the UE 810 or an LTM suggestion from the S-DU 820-2, and may determine candidate cells for LTM preparation. The candidate cells may be determined based on measurement results for neighboring cells included in the L3 measurement report message or candidate cells suggested by the S-DU 820-2. At least some of the determined candidate cells may be cells of another NG-RAN node (e.g., C-CU1 830-1 or C-CU2 840-1).

In step S809, an inter-CU LTM preparation and configuration procedure may be performed. The inter-CU LTM preparation and configuration procedure may be initiated by the S-CU 820-1. According to an embodiment, the inter-CU LTM preparation and configuration procedure may include a pre-preparation procedure for LTM and a post-preparation procedure for LTM. The pre-preparation procedure for LTM may be a procedure for confirming LTM admission for each of the candidate cells and performing LTM configuration for at least one admitted candidate cell, and the post-preparation procedure for LTM may be a procedure for sharing information required for performing inter-CU LTM operation among the CUs of the at least one admitted candidate cell. The inter-CU LTM preparation and configuration procedure may be configured as in Embodiment #1 described below.

In step S811, an early Timing Advance (TA) acquisition procedure may be performed. For example, an early TA acquisition procedure for at least one candidate cell may be performed. The early TA acquisition procedure may be configured as in Embodiment #2 described below.

In step S813, an inter-CU LTM execution procedure may be performed. For example, a procedure for changing the serving DU of the UE 810 to a DU belonging to a CU other than the current serving CU based on an L1 measurement report message may be performed. The inter-CU LTM execution procedure may be configured as in Embodiment #3 described below.

### Embodiment #1: Procedure for Supporting Inter-CU LTM Preparation and Configuration

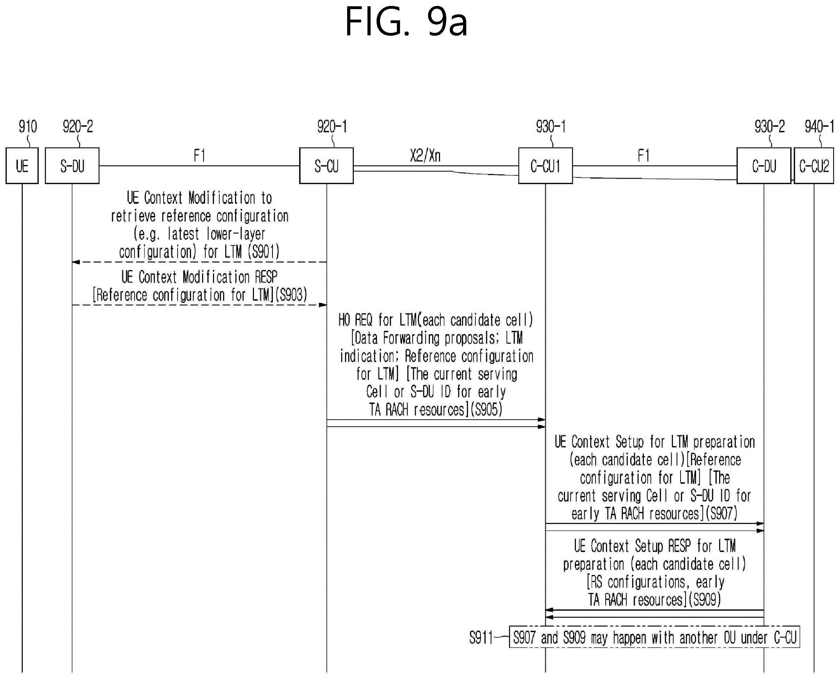

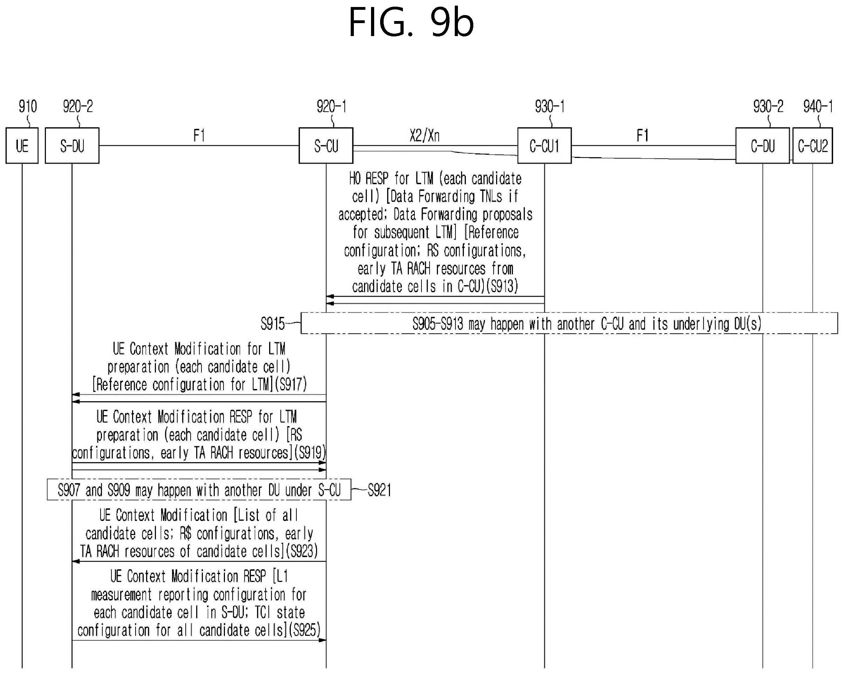

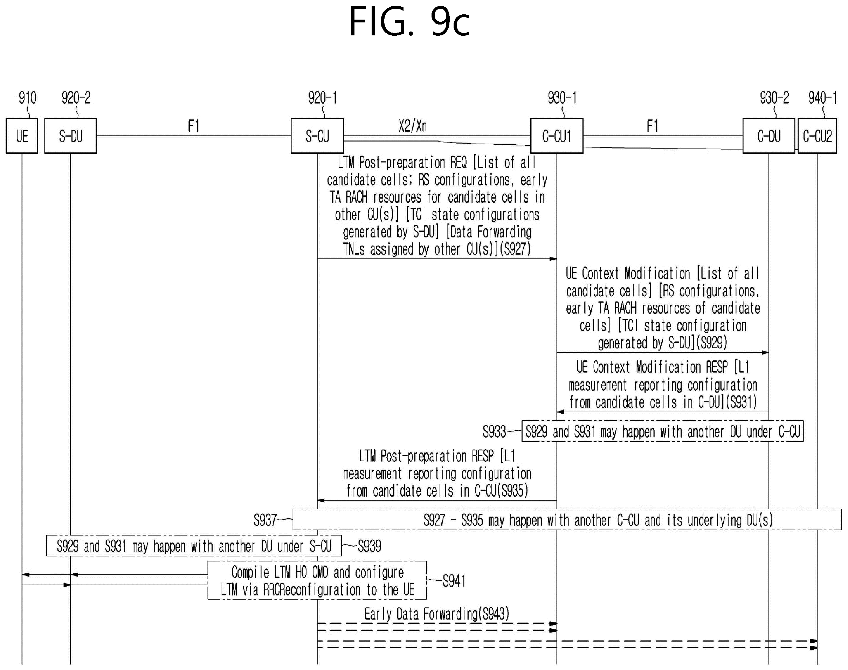

FIG. 9a to FIG. 9c illustrate an example of an inter-CU LTM preparation and configuration procedure according to an embodiment of the present disclosure. The procedure of FIG. 9a to FIG. 9c may be understood as a detailed procedure of step S809 of FIG. 8.

Referring to FIGS. 9a to 9c, in step S901, the S-CU 920-1 transmits a UE context modification message to the S-DU 920-2 to retrieve reference configuration information to be used for LTM. After deciding to initiate LTM configuration for the UE as in step S807 of FIG. 8, the S-CU 920-1 may request the provision of reference configuration information for LTM by transmitting a UE context modification message to the S-DU 920-2.

In step S903, the S-DU 920-2 transmits a UE context modification response message to the S-CU 920-1. The UE context modification response message may include reference configuration information for LTM. The reference configuration information may include information related to the latest lower-layer configuration of the UE.

In step S905, the S-CU 920-1 transmits a handover request message for each candidate cell to the C-CU1 930-1, which is the CU of the NG-RAN node to which at least one candidate cell among the candidate cells determined for LTM belongs. The handover request messages for each candidate cell may be transmitted in parallel. The handover request message for each candidate cell may include information related to a data forwarding proposal, an LTM indication indicating that the message is for LTM, and reference configuration information to be used for LTM. The information related to the data forwarding proposal may include information related to uplink and/or downlink forwarding proposals for S-CU terminated PDU sessions and/or Data Radio Bearers (DRBs). In addition, the handover request message for each candidate cell may include the current serving cell ID of the UE or the serving S-DU ID. The current serving cell ID or the serving S-DU ID may be used to allocate Random Access Channel (RACH) resources for early TA acquisition, i.e., early TA RACH resources, at the C-CU1 930-1.

In step S907, the C-CU1 930-1 transmits a UE context setup message for LTM preparation to the C-DU 930-2 to which at least one candidate cell belongs. The UE context setup message is transmitted per candidate cell and may include reference configuration information to be used for LTM. In step S909, the C-DU 930-2 transmits a UE context setup response message for LTM preparation to the C-CU1 930-1. The UE context setup response message is transmitted per candidate cell and may include information related to a Reference Signal (RS) configuration and information related to early TA RACH resources. In other words, in steps S907 and S909, the C-CU1 930-1 may perform admission control for each candidate cell with the corresponding C-DU 930-2 based on the handover request message for each candidate cell, and establish a UE context for LTM preparation. The C-DU 930-2 may perform LTM configuration based on the reference configuration information to be used for LTM included in the UE context setup message.

If at least one other candidate cell among the candidate cells determined for LTM belongs to at least one other DU (e.g., C-DU2) connected to the C-CU1 930-1, the C-CU1 930-1 may, in step S911, perform admission control for the candidate cell with the corresponding at least one other DU and establish a UE context for LTM preparation. Step S911 may be configured to perform the same operations as steps S907 and S909, and may be performed in parallel. For example, step S911 may be performed at least temporarily at the same time as steps S907 and S909. According to an embodiment, if at least one other DU (e.g., C-DU2) connected to the C-CU1 930-1 does not manage any cell among the candidate cells suggested for LTM, step S911 may be omitted.

In step S913, the C-CU1 930-1 transmits a handover response message for each candidate cell to the S-CU 920-1. The handover response message may include at least one of information related to forwarding Transport Network Layer addresses (TNLs), information related to a data forwarding proposal to be used for a subsequent LTM, reference configuration information used for LTM configuration, or information related to an RS configuration prepared for the requested candidate cells and information related to an early TA RACH resource. The forwarding TNLs may be allocated by the C-CU 930-1 based on the information related to the data forwarding proposal of the S-CU 920-1 received in step S905, and the information related to the forwarding TNLs may include at least one of a target GPRS Tunneling Protocol - User Plane tunnel endpoint identifier (GTP-U TEID) or a target IP address. The information related to the data forwarding proposal to be used for a subsequent LTM may include information related to uplink and/or downlink forwarding proposals for C-CU terminated PDU sessions and/or DRBs. For example, the information related to the data forwarding proposal to be used for a subsequent LTM may include information related to a data forwarding proposal to be used when the C-CU later becomes the new serving CU through inter-CU LTM. The reference configuration information used for LTM configuration is the reference configuration information used for LTM configuration prepared at the C-CU1 930-1, and may be included in the handover response message and provided to the S-CU 920-1 when it differs from the reference configuration information provided by the S-CU 920-1, or when no reference configuration information has been provided from the S-CU 920-1. If at least one of the handover-requested candidate cells is not admitted through admission control, a handover failure message may be transmitted in response to the handover request.

In step S915, the C-CU 930-1 may perform the LTM preparation procedure as described in steps S905 to S913 for each candidate cell in another NG-RAN node. For example, if at least one other candidate cell among the candidate cells for LTM belongs to the C-CU2 940-1, an LTM preparation procedure with the C-CU2 940-1 and the C-DU connected to the C-CU2 940-1 may be performed by transmitting a handover request message for LTM to the C-CU2 940-1.

In step S917, the S-CU 920-1 transmits a UE context modification message for LTM preparation to the S-DU 920-2, and in step S919, the S-DU 920-2 transmits a UE context modification response message for LTM preparation per candidate cell to the S-CU 920-1. The UE context modification message and the UE context modification response message are transmitted and received for each of the candidate cells. In addition, the UE context modification message may include reference configuration information to be used for LTM configuration, and the UE context setup response message may include information related to an RS configuration and information related to early TA RACH resources. That is, for at least one candidate cell belonging to the S-DU 920-2, the S-CU 920-1 may perform admission control with the S-DU 920-2 and establish a UE context to prepare for LTM.

In step S921, the S-CU 920-1 transmits a UE context setup message for LTM preparation to another DU connected to the S-CU 920-1, and receives a UE context setup response message for LTM preparation from the other DU. The other DU may be another DU connected to the S-CU, other than the S-DU, that manages at least one candidate cell among the candidate cells determined for LTM. Step S921 may be configured to perform the same operations as steps S907 and S909, and may be performed in parallel with steps S917 and S919. For example, step S921 may be performed at least temporarily at the same time as steps S917 and S919. According to an embodiment, if the other DU connected to the S-CU 920-1 does not manage any cell among the candidate cells determined for LTM, step S921 may be omitted.

In step S923, the S-CU 920-1 transmits a UE context modification message to the S-DU 920-2. The UE context modification message may include information required to perform LTM operations. The information required to perform LTM operations includes a list of accepted/prepared candidate cells, information related to the RS configuration of the corresponding candidate cells, or information related to the early TA RACH resources of the corresponding candidate cells.

In step S925, the S-DU 920-2 transmits a UE context modification response message to the S-CU 920-1. The UE context modification response message includes information related to an L1 measurement report configuration for each candidate cell within the S-DU 920-2, and Transmission Configuration Indication (TCI) state configuration information for all candidate cells. For example, for accepted candidate cells of the S-DU 920-2, the S-DU 920-2 may generate information related to an L1 measurement report configuration for each candidate cell and may provide the generated information related to the L1 measurement report configuration to the S-CU 920-1. In addition, the S-DU 920-2 may generate and provide TCI state configuration information for the accepted/prepared candidate cells to the S-CU 920-1.

In step S927, the S-CU 920-1 transmits an LTM post-preparation request message to the C-CU1 930-1. The LTM post-preparation request message includes information required to perform LTM operations. The information required to perform LTM operations includes a list of all accepted/prepared candidate cells, information related to the RS configuration of the corresponding candidate cells prepared by at least one other CU, and information related to the early TA RACH resources of the corresponding candidate cells prepared by the at least one other CU. The LTM post-preparation request message may further include TCI state configuration information generated by the S-DU 920-2. In addition, the LTM post-preparation request message may include information related to data forwarding TNLs assigned by the other CU. The information related to the data forwarding TNLs may be used for data forwarding from the C-CU1 to other CUs when LTM is executed toward one of the candidate cells under the C-CU1.

In step S929, the C-CU1 930-1 transmits a UE context modification message to the C-DU 930-2. The UE context modification message includes information required to perform LTM operations. The information required to perform LTM operations may include at least one of a list of all accepted/prepared candidate cells, information related to an RS configuration for candidate cells prepared by at least one other DU, or information related to early TA RACH resources for candidate cells prepared by the at least one other DU. The C-CU1 930-1 may also forward the TCI state configuration information generated by the S-DU 920-2 to the C-DU 930-2 using the UE context modification message.

In step S931, the C-DU 930-2 transmits a UE context modification response message to the C-CU1 930-1. For accepted candidate cells within the C-DU 930-2, the C-DU 930-2 may generate information related to an L1 measurement report configuration and may provide the generated information related to the L1 measurement report configuration to the C-CU 930-1.

In step S933, the C-CU1 930-1 transmits a UE context modification message to another C-DU connected to the C-CU1 930-1, and receives a UE context modification response message from the other C-DU. The other C-DU may be the C-DU to which at least one other accepted/prepared candidate cell among the candidate cells suggested for LTM belongs. Step S933 may be performed in parallel with steps S929 and S931. For example, step S933 may be performed at least temporarily at the same time as steps S929 and S931. According to an embodiment, if no accepted/prepared candidate cell belongs to the other C-DU connected to the C-CU1 930-1, step S933 may be omitted.

In step S935, the C-CU1 930-1 transmits an LTM post-preparation response message to the S-CU 920-1. The LTM post-preparation response message may include information related to an L1 measurement report configuration of at least one candidate cell accepted at the C-CU1 930-1.

In step S937, the C-CU 930-1 may perform the LTM post-preparation procedure as described in steps S927 to S935 for at least one candidate cell in another NG-RAN node. For example, if at least one accepted/prepared candidate cell belongs to the C-CU2 940-1, an LTM post-preparation procedure with the C-CU2 940-1 and the C-DU connected to the C-CU2 940-1 may be performed by transmitting an LTM post-preparation request message to the C-CU2 940-1.

In step S939, for a candidate cell accepted/prepared at another DU connected to the S-CU 920-1, a UE context modification procedure may be performed. The S-CU 920-1 transmits a UE context modification message to another DU connected to the S-CU, and receives a UE context modification response message from the other DU. The other DU may be another DU connected to the S-CU, other than the S-DU, to which an accepted/prepared candidate cell belongs. According to an embodiment, if no accepted/prepared candidate cell belongs to the other DU connected to the S-CU 920-1, step S939 may be omitted.

In step S941, the S-CU 920-1 compiles an LTM handover command including LTM configuration information generated for all accepted/prepared candidate cells and the corresponding lower-layer configuration information for LTM, and reconfigures the UE via the S-DU 920-2. The lower-layer configuration information includes at least one of information related to an RS configuration, information related to an L1 measurement report configuration, a TCI state, or information related to a RACH configuration.

In step S943, the S-CU 920-1 may perform early data forwarding based on information related to data forwarding TNLs assigned by the other CU.

In Embodiment #1 described with reference to FIGS. 9a to 9c, it is assumed that information related to the final TCI state configuration configured to the UE is generated by the S-DU and disseminated to all the other relevant DUs for LTM operations. However, TCI state configuration information corresponding to each accepted/prepared candidate cell may be determined by each DU (e.g., C-DU) responsible for that candidate cell. In this case, the information related to the TCI state configuration may be provided to the corresponding CU (e.g., C-CU) in step S909 and forwarded to the S-CU via step S913. Information related to the TCI state configuration generated by the S-DU may be provided to the S-CU in step S917 or S919, and information related to the TCI state configuration generated by a DU other than the S-DU may be provided to the S-CU in step S921.

For LTM operations, the information related to the TCI state configuration collected at the S-CU may be further disseminated to all relevant DUs via steps S923 and S925, steps S927 to S935, and/or step S939.

In Embodiment #1 described with reference to FIGS. 9a to 9c, steps S901 to S921 may correspond to the pre-preparation procedure for LTM, and steps S923 to S941 may correspond to the post-preparation procedure for LTM.

### Embodiment #2: Early TAAcquisition Procedure

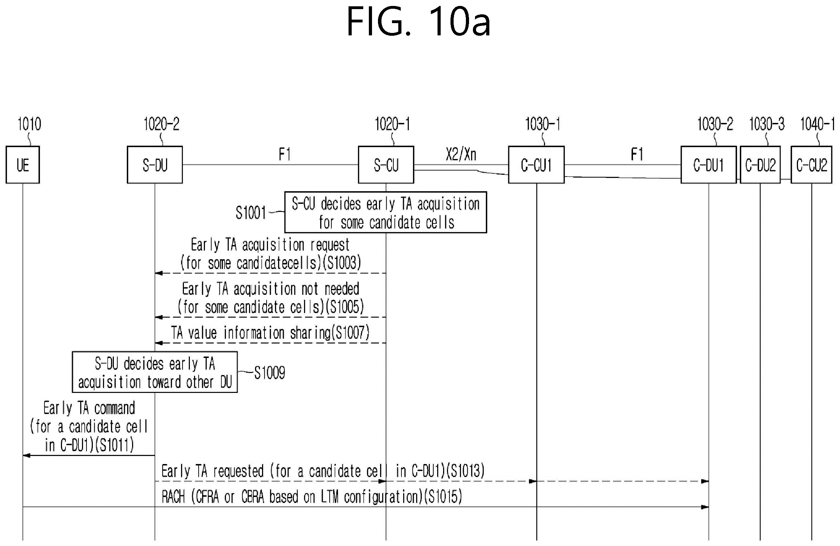

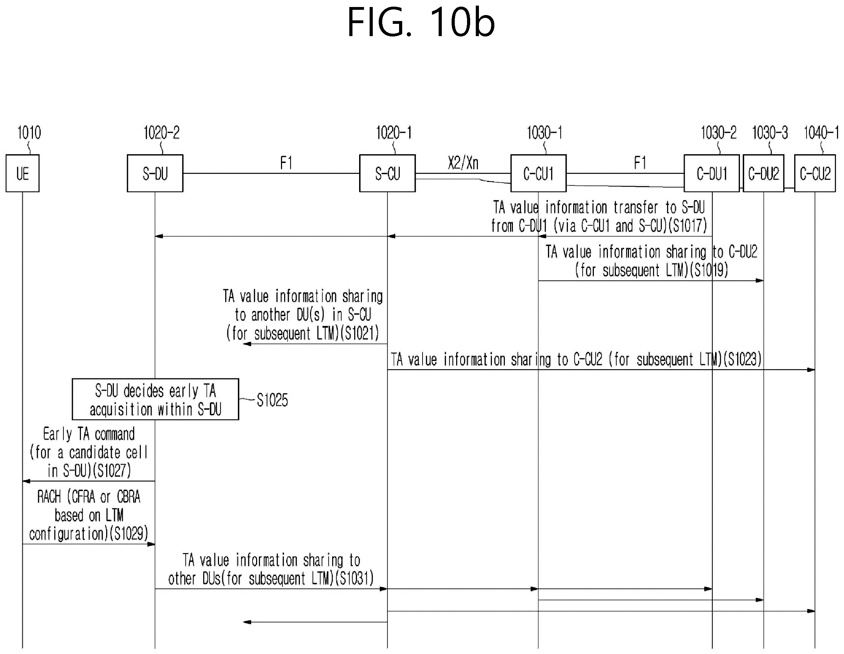

FIG. 10a and FIG. 10b illustrate an example of an early TA acquisition procedure according to an embodiment of the present disclosure. The procedure of FIG. 10a and FIG. 10b may be understood as a detailed procedure of step S811 of FIG. 8.

Referring to FIG. 10a and FIG. 10b, in step S1001, the S-CU 1020-1 decides early TA acquisition for at least some of the candidate cells. In this case, the S-CU 1020-1 may perform at least one of step S1003, step S 1005, or step S1007 described below. In step S1003, the S-CU 1020-1 may request the S-DU 1020-2 to perform early TA acquisition for some of the candidate cells. In step S1005, the S-CU 1020-1 may transmit a message to the S-DU 1020-2 indicating that early TA acquisition is not required for some of the candidate cells. For example, the S-CU 1020-1 may indicate to the S-DU 1020-2 that TA acquisition is not required for some cells co-located with a cell whose TA value is known. In step S1007, the S-CU 1020-1 may provide a TA value to the S-DU 1020-2. For example, if the S-CU 1020-1 knows the TA value of a specific candidate cell, the S-CU 1020-1 may provide the TA value to the S-DU 1020-2.

In step S1009, the S-DU 1020-2 decides early TA acquisition for a candidate cell within another DU.

In step S1011, the S-DU 1020-2 transmits an early TA acquisition command message to the UE 1010. The early TA acquisition command message may include information instructing the performance of early TA acquisition for a candidate cell within another DU.

In step S1013, the S-DU 1020-2 transmits a message to the DU of the corresponding candidate cell, i.e., the C-DU1 1030-2, notifying that early TA acquisition has been requested to the UE. For example, the S-DU 1020-2 may transmit a message notifying that early TA acquisition for the candidate cell of the C-DU1 1030-2 has been requested to the UE to the C-DU1 1030-2 via the S-CU 1020-1 and the C-CU1 1030-1.

In step S1015, the UE 1010 performs RACH for the designated candidate cell. The UE 1010 may obtain information about the candidate cell designated as the target for early TA acquisition based on the early TA acquisition command message, and may transmit a random access preamble based on the information about the designated candidate cell. The UE 1010 may perform Contention Free Random Access (CFRA) or Contention Based Random Access (CBRA) based on LTM configuration information.

In step S1017, the C-DU1 1030-2 may calculate the TA value of the candidate cell based on the RACH of the UE 1010, and may transfer the TA value of the candidate cell back to the S-DU 1020-2. At this time, the TA value of the candidate cell is transferred to the S-DU 1020-2 via the C-CU1 1030-1 and the S-CU 1020-1.

In step S1019, the C-CU1 1030-1 shares the TA value of the candidate cell with another DU connected to the C-CU1 1030-1, i.e., the C-DU2 1030-3, for subsequent LTM operations. In step S1021 and step S1023, the S-CU 1020-1 may share the TA value of the candidate cell with at least one other DU of the S-CU 1020-1 and the C-CU2 1040-1 of another NG-RAN node for subsequent LTM operations.

In step S1025, the S-DU 1020-2 decides early TA acquisition for a candidate cell within the S-DU. In step S1027, the S-DU 1020-2 may transmit an early TA acquisition command message for the candidate cell of the S-DU 1020-2 to the UE 1010. The early TA acquisition command message may include information related to the candidate cell of the S-DU 1020-2.

In step S1029, the UE 1010 performs RACH for the designated candidate cell. The UE 1010 may transmit a random access preamble based on information related to the designated candidate cell included in the early TA acquisition command message. The UE 1010 may perform CFRA or CBRA based on LTM configuration information.

In step S1031, the S-DU 1020-2 may calculate the TA value of the candidate cell based on the RACH of the UE 1010, and may transfer the TA value of the candidate cell to the S-CU 1020-1. At this time, the TA value of the candidate cell transferred to the S-CU 1020-1 may be shared with at least one other DU for subsequent LTM operations. The other DU may include at least one of another DU connected to the S-CU 1020-1, the C-DU1 1030-2 connected to the C-CU1 1030-1, the C-DU2 1030-3, or a DU connected to the C-CU2 1040-1.

In the embodiment described with reference to FIG. 10a and FIG. 10b, the early TA acquisition procedure may be initiated by a C-CU or a DU other than the S-DU as the serving cell changes during the LTM process.

### Embodiment #3: Inter-CU LTM Execution Support

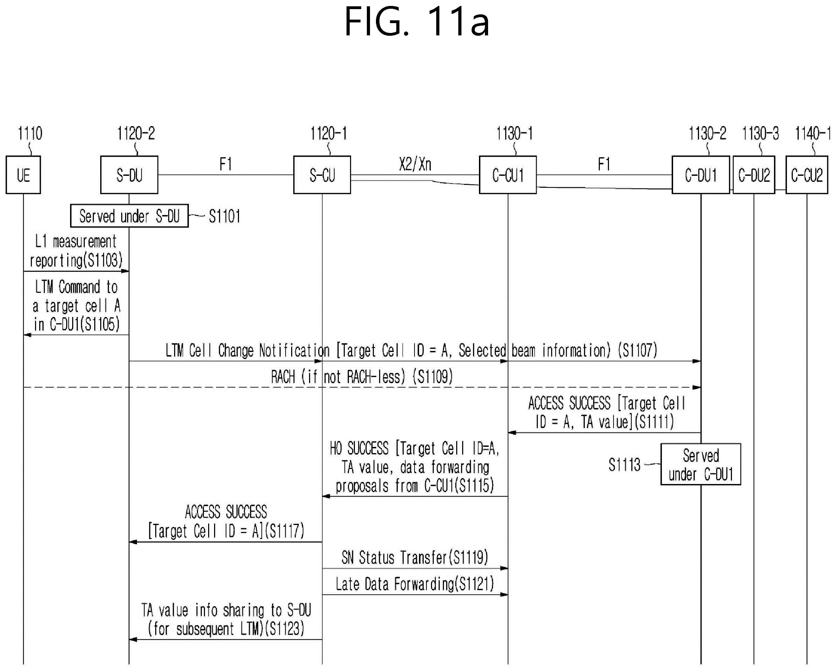

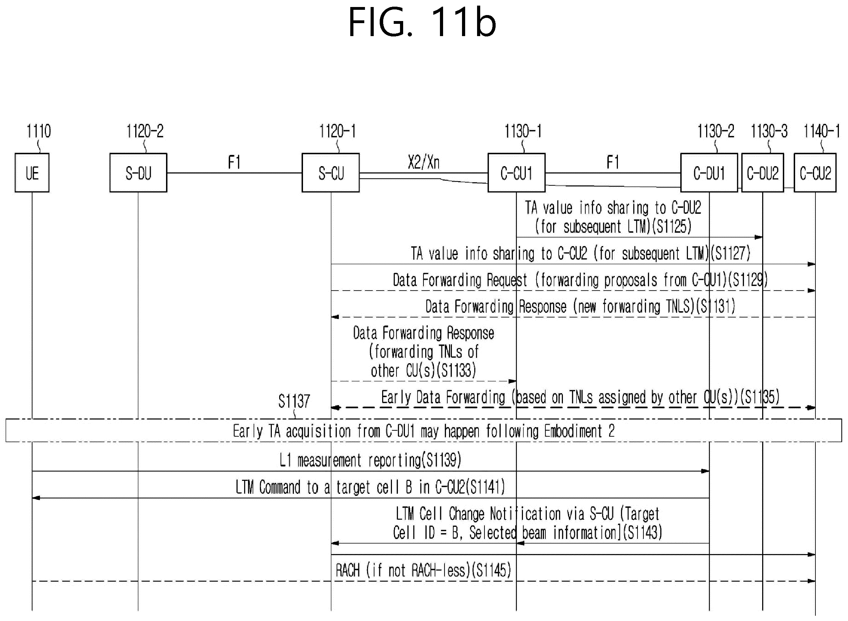

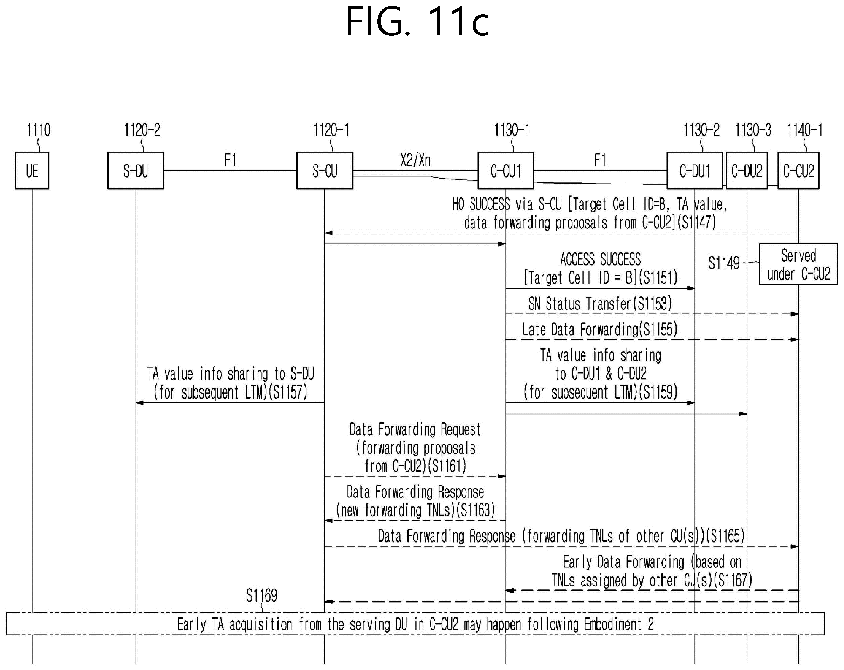

FIG. 11a to FIG. 11c illustrate an example of an inter-CU LTM execution procedure according to an embodiment of the present disclosure. The procedure of FIG. 11a to FIG. 11c may be understood as a detailed procedure of step S813 of FIG. 8.

Referring to FIG. 11a to FIG. 11c, in step S1101, a cell of the S-DU 1120-2 operates as the serving cell of the UE 1110. In step S1103, the UE 1110 transmits an L1 measurement report message to the S-DU 1120-2, which is the current serving DU, based on LTM configuration information configured for the UE.

In step S1105, the S-DU 1120-2 decides cell switch of the UE 1110 and transmits an LTM handover command message commanding the UE 1110 to handover to a target cell within another CU. The target cell within the other CU may be one of the prepared candidate cells, and may be selected based on measurement results for neighboring cells, i.e., candidate cells, included in the L1 measurement report message.

In step S1107, the S-DU 1120-2 transmits an LTM cell change notification message to the C-DU1 1130-2 to which the target cell belongs. The LTM cell change notification message may be provided to the C-DU1 1130-2 via the S-CU 1120-1 and the C-CU1 1130-1. The LTM cell change notification message may include a target cell ID and selected beam information. The selected beam information may be obtained based on the L1 measurement report message, and may be provided from the S-DU 1120-2 to the C-DU1 1130-2 for appropriate uplink scheduling.

In step S1109, the UE 1110 performs RACH and accesses the target cell. If the early TA acquisition procedure has already been performed for the target cell, RACH in step S1109 may be omitted.

In step S1111, the C-DU1 1130-2 transmits an access success message to the C-CU1 1130-1. In other words, when the UE 1110 successfully accesses the target cell, the C-DU1 1130-2 may transmit an access success message to the C-CU1 1130-1. The access success message may include a target cell ID and a TA value for the target cell. The TA value for the target cell may be obtained based on the RACH of step S1109 or step S811 of FIG. 8 performing early TA acquisition. In step S1113, the C-DU1 1130-2 may operate as the new serving DU for the UE 1110.

In step S1115, the C-CU1 1130-1, which is the current serving CU, transmits a handover success message to the S-CU 1120-1, which is the previous serving CU, notifying of the access of the UE 1110 and the cell accessed by the UE. The handover success message may include at least one of the ID of the target cell accessed by the UE, the TA value for the target cell, or information related to a data forwarding proposal of the C-CU1 1130-1. The target cell ID includes identification information of the cell accessed by the UE. The C-CU1 1130-1, which is the new serving CU of the UE 1110, may share the TA value for the target cell with at least one other DU for subsequent LTM operations.

In step S1117, the S-CU 1120-1, which is the previous serving CU, transmits an access success message to the S-DU 1120-2, which is the previous serving DU, notifying of the access of the UE 1110 and the cell accessed by the UE. The access success message may include the ID of the target cell accessed by the UE. In step S1119, the S-CU 1120-1, which is the previous serving CU, transmits a Sequence Number (SN) status transfer message to the C-CU1 1130-1, which is the new serving CU, and in step S1121, performs late data forwarding. That is, the S-CU 1120-1, which is the previous serving CU, may trigger SN status transfer for DRBs requiring PDCP preservation.

In step S1123, step S1125, and step S1127, the S-CU 1120-1, which is the previous serving CU, and the C-CU1 1130-1, which is the new serving CU, share the TA value for the cell accessed by the UE with at least one other DU other than the new serving DU for subsequent LTM operations. The at least one other DU may include at least one of the S-DU 1120-2, the C-DU2 1130-3, or a DU connected to the C-CU2 1140-1.

In step S1129, the S-CU 1120-1 transmits a data forwarding request message to the C-CU2 1140-1, which is not the new serving CU. The data forwarding request message may include information related to a data forwarding proposal of the C-CU1 1130-1, which is the new serving CU. In step S1131, the C-CU2 1140-1 transmits a data forwarding response message to the S-CU 1120-1. The data forwarding response message may include information related to data forwarding TNLs newly assigned by the C-CU2 1140-1 based on information related to the data forwarding proposal of the C-CU1 1130-1.

In step S1133, the S-CU 1120-1 transmits a data forwarding response message including information related to newly assigned data forwarding TNLs based on information related to the data forwarding proposal of the C-CU1 1130-1 to the C-CU1 1130-1, which is the new serving CU. The data forwarding response message may include at least one of information related to forwarding TNLs newly assigned by the C-CU2 1140-1, or information related to forwarding TNLs newly assigned by the S-CU 1120-1. In step S1135, the C-CU1 1130-1 may perform early data forwarding based on the newly assigned forwarding TNLs.

In step S1137, an early TA acquisition procedure may be initiated from the C-DU1 1130-2, which is the new serving DU. The early TA acquisition procedure may be performed as described in Embodiment #2.

In step S1139, the UE 1110 transmits an L1 measurement report message to the C-DU1 1130-2, which is the current serving DU, as configured for the UE.

In step S1141, the C-DU1 1130-2, which is the current serving DU, decides cell switch of the UE 1110 and transmits an LTM handover command message commanding the UE 1110 to handover to a target cell within another CU. The target cell within the other CU may be one of the prepared candidate cells, and may be selected based on measurement results for neighboring cells, i.e., candidate cells, included in the L1 measurement report message.

In step S1143, the C-DU1 1130-2, which is the current serving DU, transmits an LTM cell change notification message to the C-CU2 1140-1 to which the target cell belongs. The LTM cell change notification message may include a target cell ID and selected beam information. The LTM cell change notification message may be forwarded to the C-CU2 1140-1 and a DU connected to the C-CU2 1140-1 via the C-CU1 1130-1 and the S-CU 1120-1.

In step S1145, the UE 1110 performs RACH and accesses the target cell. If the early TA acquisition procedure has already been performed for the target cell, RACH in step S1145 may be omitted.

In step S1147, the C-CU2 1140-1 transmits a handover success message to the C-CU1 1130-1. The C-CU2 1140-1 may receive an access success message from a DU connected to the C-CU2 1140-1, i.e., the DU of the target cell successfully accessed by the UE 1110, and may transmit a handover success message to the C-CU1 1130-1 via the S-CU 1120-1 in response to the access success message. The access success message may include a target cell ID and a TA value for the target cell. The TA value for the target cell may be obtained based on the RACH of step S1145 or step S811 of FIG. 8 performing early TA acquisition. The handover success message may include at least one of the ID of the target cell accessed by the UE, the TA value for the target cell, or information related to a data forwarding proposal of the C-CU2 1140-1. The target cell ID includes identification information of the cell accessed by the UE. In step S1149, the C-CU2 1140-1 may operate as the new serving CU for the UE 1110. The C-CU1 1130-1 becomes the previous serving CU.

In step S1151, the C-CU1 1130-1, which is the previous serving CU, transmits an access success message to the C-DU1 1130-2, which is the previous serving DU, notifying of the access of the UE 1110 and the cell accessed by the UE. The access success message may include the ID of the target cell accessed by the UE. In step S1153, the C-CU1 1130-1, which is the previous serving CU, transmits an SN status transfer message to the C-CU2 1140-1, which is the new serving CU, and in step S1155, performs late data forwarding. That is, the C-CU1 1130-1, which is the previous serving CU, may trigger SN status transfer for DRBs requiring PDCP preservation.

In step S1157 and step S1159, the S-CU 1120-1, the C-CU1 1130-1, which is the previous serving CU, and the C-CU2 1140-1, which is the new serving CU, share the TA value for the cell accessed by the UE with at least one other DU other than the new serving DU for subsequent LTM operations. The at least one other DU may include at least one of the S-DU 1120-2, the C-DU1 1130-2, the C-DU2 1130-3, or another DU connected to the C-CU2 1140-1.

In step S1161, the S-CU 1120-1 transmits a data forwarding request message to the C-CU1 1130-1, which is the previous serving CU. The data forwarding request message may include information related to a data forwarding proposal of the C-CU2 1140-1, which is the new serving CU. In step S1163, the C-CU1 1130-1 transmits a data forwarding response message to the S-CU 1120-1. The data forwarding response message may include information related to data forwarding TNLs newly assigned by the C-CU1 1130-1 based on information related to the data forwarding proposal of the C-CU2 1140-1.

In step S1165, the S-CU 1120-1 transmits a data forwarding response message including information related to newly assigned forwarding TNLs based on information related to the data forwarding proposal of the C-CU2 1140-1 to the C-CU2 1140-1, which is the new serving CU. The data forwarding response message may include at least one of information related to forwarding TNLs newly assigned by the C-CU1 1130-1, or information related to forwarding TNLs newly assigned by the S-CU 1120-1. In step S1167, the C-CU2 1140-1 may perform early data forwarding based on the newly assigned forwarding TNLs.

In step S1169, an early TA acquisition procedure may be initiated from a DU connected to the C-CU2 1140-1. The early TA acquisition procedure may be performed as described in Embodiment #2.

In the embodiment described with reference to FIG. 11a to FIG. 11c, step S1101 to step S1137 correspond to the inter-CU LTM execution procedure for the case where the serving DU of the UE changes from the S-DU 1120-2 connected to the S-CU 1120-1 to the C-DU1 1130-2 connected to the C-CU1 1130-1, and step S1139 to step S1169 correspond to the inter-CU LTM procedure for the case where the serving DU of the UE changes from the C-DU1 1130-2 connected to the C-CU1 1130-1 to a DU connected to the C-CU2 1140-1. That is, when the serving DU changes to a DU under another CU based on an L1 measurement report message of the UE, the inter-CU LTM execution procedure as described in step S1101 to step S1137, or step S1139 to step S1169 may be performed.

In the embodiment described with reference to FIG. 11a to FIG. 11c, the path switch procedure following the serving DU change has been omitted for brevity, but may be performed after each inter-CU LTM procedure is executed.

In the embodiment described with reference to FIG. 11a to FIG. 11c, step S1129 to step S1133 and/or step S1161 to step S1165 may be omitted. For example, if information related to a data forwarding proposal of the CU of the target cell and information related to TNLs assigned by another CU based on the data forwarding proposal have been exchanged during the inter-CU LTM preparation and configuration procedure of Embodiment #1, step S1129 to step S1133 and/or step S1161 to step S1165 may be omitted.

As described above, the present disclosure proposes a procedure for supporting LTM in a network system. According to an embodiment, the network system may include networks interconnected by an X2 or Xn interface to support LTM of the UE. Each network node may include a CU and at least one DU connected to the CU.

According to an embodiment, a serving DU may receive an L1 measurement report message for neighboring cells from the UE, and may suggest LTM to the serving CU and may suggest candidate cells for LTM.

According to an embodiment, a serving CU decides to initiate LTM configuration for the UE and transmits a handover request message to another CU for inter-CU LTM preparation and configuration. The serving CU may decide to initiate LTM configuration for the UE based on an L3 measurement report message from the UE or an LTM suggestion from the serving DU. The handover request message may include at least one of an indication indicating that the handover request message is for LTM, information related to candidate cells suggested for LTM, information related to a data forwarding proposal, reference configuration information to be used for LTM configuration information generation, or the current serving cell ID and/or serving DU ID of the UE to be used for early TA RACH resource allocation.

According to an embodiment, the CU that has received the handover request message performs admission control and LTM preparation with the corresponding DU of the candidate cells suggested for LTM, and then transmits a handover response message to the serving CU. The handover response message may include at least one of information related to LTM configuration prepared for the UE, information related to data forwarding TNLs, information related to a data forwarding proposal to be used for subsequent LTM operations when LTM is executed toward one of the candidate cells under the CU that received the handover request message, reference configuration information used for the prepared LTM configuration, information related to an RS resource configuration, information related to early TA RACH resources allocated by the prepared candidate cells, or information related to a TCI state configuration of candidate cells generated by at least one DU connected to the CU that received the handover request message. Here, the information related to the data forwarding TNLs may include information related to forwarding TNLs assigned by the corresponding CU based on information related to the data forwarding proposal included in the handover request message. That is, if the corresponding CU and at least one DU connected to the corresponding CU accept the data forwarding proposal provided by the serving CU, information related to data forwarding TNLs assigned based on the data forwarding proposal may be included in the handover response message.

According to an embodiment, the serving CU transmits an LTM post-preparation request message to the CU that received the handover request message. The LTM post-preparation request message may include information required to perform LTM operations. The information required to perform LTM operations may include a list of all accepted and/or prepared candidate cells, information related to an RS configuration and information related to early TA RACH resources of candidate cells prepared by at least one other CU, information related to a TCI state configuration generated by at least one DU connected to the at least one other CU and the serving CU, or information related to forwarding TNLs assigned by the at least one other CU. The information related to forwarding TNLs assigned by the at least one other CU may be used for data forwarding when LTM is executed toward one of the candidate cells under the CU that received the LTM post-preparation request message.

According to an embodiment, the CU that received the LTM post-preparation request message may perform a UE context modification procedure with at least one DU connected to the corresponding CU, and may then transmit an LTM post-preparation response message to the serving CU. The LTM post-preparation response message may include information related to a TCI state configuration and information related to an L1 measurement report configuration of candidate cells generated by at least one DU connected to the corresponding CU.

According to an embodiment, the serving CU may transmit an LTM handover command message to the terminal. The LTM handover command message may include information related to LTM configuration generated for all candidate cells prepared by the serving CU and at least one other CU.

According to an embodiment, the serving CU may request the serving DU to perform early TA acquisition for the UE. According to an embodiment, the serving CU may indicate to the serving DU that early TA acquisition is not required for at least one candidate cell. According to an embodiment, the serving CU may provide the TA value of at least one candidate cell to the serving DU.

According to an embodiment, the serving DU may command the UE to perform early TA acquisition for a candidate cell, and may then inform the DU of the corresponding candidate cell that early TA acquisition was requested to the UE for that candidate cell. The serving CU and/or the CU of the candidate cell may forward information received from the serving DU to the DU of the candidate cell. The DU of the candidate cell may calculate the TA value of the candidate cell, and may transfer the calculated TA value of the candidate cell back to the serving DU. Information from the DU of the candidate cell may be forwarded to the serving DU via the serving CU and/or the CU of the candidate cell. The serving CU or the CU of the candidate cell may share the calculated TA value of the candidate cell with at least one other DU for subsequent LTM operations. The serving DU and the DU of the candidate cell may be the same entity.

According to an embodiment, the serving DU may decide cell switch and may command the UE to handover to a target cell. The target cell may be one of the prepared candidate cells. The serving DU may transmit an LTM cell change notification message to the DU of the target cell. The LTM cell change notification message may include selected beam information. The serving CU or the CU of the target cell may forward information from the serving DU to the DU of the target cell.

According to an embodiment, the DU of the target cell may transmit an access success message notifying the CU of the target cell of the access of the UE. The access success message may include the TA value calculated during the access of the UE to the target cell. The CU of the target cell may share the calculated TA value of the target cell with at least one other DU connected to the CU of the target cell. The CU of the target cell may forward information provided from the DU of the target cell to the source CU or the serving CU. The CU of the target cell may forward the target cell accessed by the UE and a data forwarding proposal from the CU of the target cell to the source CU and/or the serving CU. The source CU and/or the serving CU may forward information provided from the CU of the target cell to at least one other DU for subsequent LTM operations.

The source CU may request data forwarding toward at least one other CU other than the CU of the target cell, and may retrieve and/or assign a new forwarding TNL based on a data forwarding proposal from the CU of the target cell. The source CU may deliver information related to data forwarding TNLs assigned by the at least one other CU other than the CU of the target cell to the CU of the target cell. Here, the serving DU and the DU of the target cell may be the same entity. The serving CU and the CU of the target cell may be the same entity. Alternatively, the source CU and the serving CU may be the same entity.

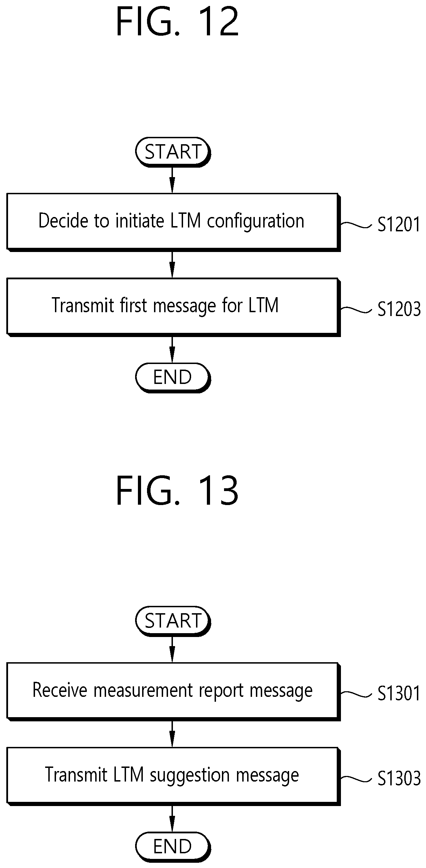

FIG. 12 illustrates an example of a procedure for triggering LTM according to an embodiment of the present disclosure. FIG. 12 illustrates a method performed by a first control node of a first base station. The first base station includes a first NG-RAN node, and the first control node may include the first CU of the first NG-RAN node. The first control node may be connected to at least one distributed node (e.g., DU) via an F1 interface, and may be connected to a control node (e.g., second CU) of at least one other base station (e.g., second base station) via an X2 or Xn interface.

Referring to FIG. 12, in step S1201, the first control node of the first base station decides to initiate an LTM configuration. The first control node may decide to initiate an inter-base station LTM configuration based on an L3 measurement report message received from a terminal or an LTM suggestion message from a first distributed node. The inter-base station LTM may include inter-CU LTM. The L3 measurement report message may include measurement results for neighboring cells. The LTM suggestion message from the first distributed node may include information related to suggested candidate cells. The suggested candidate cells may be determined based on an L1 measurement report message transmitted from the terminal to the first distributed node. The first distributed node may be a logical node connected to the first control node via an F1 interface and managing the serving cell of the terminal under the control of the first control node. The first control node may decide to initiate an inter-base station LTM configuration and may determine candidate cells for LTM. The candidate cells for LTM may be determined based on measurement results for neighboring cells included in the L3 measurement report message or candidate cells suggested by the first distributed node. The candidate cells for LTM may include at least one cell belonging to the second base station.

In step S1203, the first control node of the first base station transmits a first message for LTM. The first control node may transmit a first message for LTM to the second control node of the second base station to which at least one candidate cell among the candidate cells for LTM belongs. The first message for LTM may be transmitted to the second control node of the second base station via an X2 or Xn interface. The first message for LTM is a message for inter-base station LTM preparation and configuration, and may include a handover request message for each of the candidate cells for LTM. The handover request message for each of the candidate cells for LTM may include at least one of information related to a data forwarding proposal, an LTM indication indicating that the message is for LTM, reference configuration information to be used for LTM, or information related to the current serving cell of the terminal to be used for early TA RACH resource allocation. Here, the reference configuration information to be used for LTM may be retrieved from the first distributed node of the first base station using a UE context modification request message and a UE context modification response message. The information related to the serving cell may include at least one of a serving cell ID or the ID of the serving DU. The handover request message for each of the candidate cells may be transmitted in parallel.

According to an embodiment, the first control node of the first base station may be the S-CU of Embodiment #1, Embodiment #2, and/or Embodiment #3 described with reference to FIG. 8a to FIG. 11c. The first control node may further perform at least one operation of the S-CU described in Embodiment #1, Embodiment #2, and/or Embodiment #3.

FIG. 13 illustrates an example of an LTM preparation procedure according to an embodiment of the present disclosure. FIG. 13 illustrates a method performed by a first distributed node of a first base station. The first base station may include a first NG-RAN node. The first distributed node may include the first DU of the first NG-RAN node. The first distributed node may be connected to the first control node (e.g., first CU) of the first base station via an F1 interface.

Referring to FIG. 13, in step S1301, the first distributed node receives an L1 measurement report message from a terminal. The L1 measurement report message may include measurement results for neighboring cells.

In step S1303, the first distributed node transmits an LTM suggestion message. The LTM suggestion message may include information related to suggested candidate cells for LTM. Specifically, the first distributed node may determine suggested candidate cells for LTM based on the L1 measurement report message, and may transmit an inter-base station LTM suggestion message including information related to the determined suggested candidate cells to the first control node. At least one candidate cell among the suggested candidate cells may be a cell belonging to the second base station. The inter-base station LTM may include inter-CU LTM.

According to an embodiment, the first distributed node may be the S-DU of Embodiment #1, Embodiment #2, and/or Embodiment #3 described with reference to FIG. 8a to FIG. 11c. The first distributed node may further perform at least one operation of the S-DU described in Embodiment #1, Embodiment #2, and/or Embodiment #3.

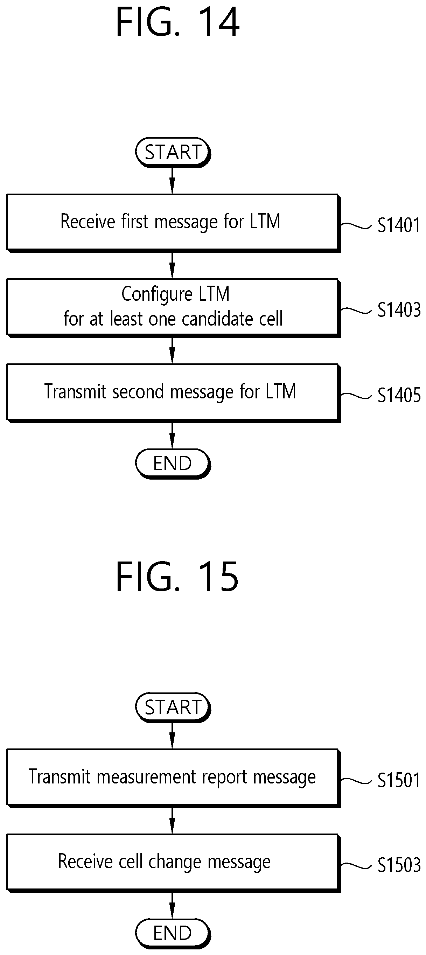

FIG. 14 illustrates an example of an LTM preparation procedure according to an embodiment of the present disclosure. FIG. 14 illustrates a method performed by a second control node of a second base station. The second base station includes a second NG-RAN node, and the second control node may include the second CU of the second NG-RAN node. The second control node may be connected to at least one distributed node (e.g., DU) via an F1 interface, and may be connected to the first control node (e.g., first CU) of at least one other base station (e.g., first base station) via an X2 or Xn interface.

Referring to FIG. 14, in step S1401, the second control node of the second base station receives a first message for LTM. The first message for LTM is a message for inter-base station LTM preparation and configuration, and may include a handover request message. The inter-base station LTM may include inter-CU LTM. In other words, the second control node may receive a handover request message for inter-CU LTM from the first control node of the first base station. The handover request message may be received for each of the candidate cells for LTM. The handover request message for each candidate cell may include at least one of information related to a data forwarding proposal, an LTM indication indicating that the message is for LTM, reference configuration information to be used for LTM, or information related to the current serving cell of the terminal to be used for early TA RACH resource allocation. The information related to the serving cell may include at least one of a serving cell ID or the ID of the serving distributed node (e.g., DU).

In step S1403, the second control node performs an LTM configuration for at least one candidate cell. The second control node may perform admission control for the candidate cells with at least one second distributed node managing the candidate cells for LTM based on the first message, and may establish a UE context for LTM preparation. Specifically, the second control node may transmit a UE context setup message to the second distributed node and may receive a UE context response message from the second distributed node. The UE context setup message may be transmitted per candidate cell and may include reference configuration information to be used for LTM. The UE context setup response message may be received per candidate cell and may include information related to an RS configuration and information related to early TA RACH resources.

In step S1405, the second control node transmits a second message for LTM. The second message for LTM may include a handover response message. In other words, the second control node may transmit a handover response message for LTM to the first control node of the first base station. The handover response message may be generated and transmitted per candidate cell. The handover response message for each candidate cell may include at least one of information related to forwarding TNLs, information related to a data forwarding proposal to be used for a subsequent LTM, reference configuration information used for LTM configuration, or information related to an RS configuration prepared for the requested candidate cells and information related to an early TA RACH resource. The forwarding TNLs may be assigned by the second control node based on information related to the data forwarding proposal included in the first message, and may include at least one of a target GTP-U TEID or a target IP address. The information related to the data forwarding proposal to be used for a subsequent LTM may include information related to uplink and/or downlink forwarding proposals for PDU sessions and/or DRBs terminated at the second control node. For example, the information related to the data forwarding proposal to be used for a subsequent LTM may include information related to a data forwarding proposal to be used when the second control node is later determined as the new serving CU through inter-base station LTM. The reference configuration information used for LTM configuration is the reference configuration information used for LTM configuration at the second control node, and may be included in the handover response message when the reference configuration information used for LTM configuration differs from the reference configuration information provided by the first control node, or when no reference configuration information has been provided from the first control node. If at least one of the candidate cells is not admitted for LTM, a handover failure message may be transmitted in response to the handover request message.

According to an embodiment, the second control node of the second base station may be the C-CU of Embodiment #1, Embodiment #2, and/or Embodiment #3 described with reference to FIG. 8a to FIG. 11c. The second control node of the second base station may further perform at least one operation of the C-CU described in Embodiment #1, Embodiment #2, and/or Embodiment #3.

FIG. 15 illustrates an example of a cell change procedure according to an LTM configuration according to an embodiment of the present disclosure. FIG. 15 illustrates a method performed by a terminal.

Referring to FIG. 15, in step S1501, the terminal transmits a measurement report message. The measurement report message may include an L1 measurement report message. The terminal may transmit an L1 measurement report message including measurement results for candidate cells configured for LTM to the first distributed node of the first base station. The first distributed node of the first base station is connected to the first control node of the first base station via an F1 interface, and manages the serving cell of the terminal under the control of the first control node.

In step S1503, the terminal receives a cell change message. The cell change message is a message commanding the terminal to handover to a target cell within another base station, and may include an LTM handover command message. The target cell may be a specific candidate cell selected by the distributed node of the first base station based on the L1 measurement report message. The terminal may access the target cell based on the cell change message. For example, the terminal may access the target cell by performing a RACH procedure for the target cell.

According to an embodiment, the terminal may be the UE of Embodiment #1, Embodiment #2, and/or Embodiment #3 described with reference to FIG. 8a to FIG. 11c. The terminal may further perform at least one operation of the UE described in Embodiment #1, Embodiment #2, and/or Embodiment #3.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a first control node of a first base station in a wireless communication system, the method comprising:
determining to initiate an L1/L2 Triggered Mobility (LTM) configuration; and
transmitting a first message related to a configuration of candidate cells for an LTM,
wherein the candidate cells for the LTM include at least one cell belonging to at least one other base station, and
wherein the first message is transmitted to a second control node of a second base station included in the at least one other base station.

2. The method of claim 1, further comprising:
receiving a measurement report message from a terminal,
wherein an initiation of the LTM configuration is determined based on the measurement report message.

3. The method of claim 1, further comprising:
receiving a message proposing an inter-base station LTM from a first distributed node of the first base station,
wherein the message proposing the inter-base station LTM includes information related to candidate cells proposed for the LTM.

4. The method of claim 1,
wherein the first message includes at least one of information related to a first data forwarding proposal, an indication indicating that the first message is for the LTM, reference configuration information to be used for the LTM, or information related to a current serving cell of a terminal to be used for a Random Access Channel (RACH) resource allocation for an early Timing Advance (TA) acquisition, and
wherein the first message is transmitted for each of the candidate cells.

5. The method of claim 1, further comprising:
receiving, in response to the first message, a second message related to the LTM from the second control node,
wherein the second message includes at least one of information related to first forwarding Transport Network Layer addresses (TNLs), information related to a second data forwarding proposal to be used for a subsequent LTM, reference configuration information used for the LTM configuration in the at least one other base station, information related to a Reference Signal (RS) configuration of at least one candidate cell prepared for the LTM, or information related to a RACH resource for an early TA acquisition of the at least one candidate cell prepared for the LTM.

6. The method of claim 5, further comprising:
transmitting, to the second control node, a third message including information required for operation of the LTM,
wherein the third message includes at least one of a list of candidate cells prepared for the LTM among the candidate cells for the LTM, information related to an RS configuration of at least one candidate cell prepared for the LTM at a third control node of a third base station included in the at least one other base station, information related to early TA RACH resources of the at least one candidate cell prepared for the LTM at the third control node, information related to a TCI state configuration generated by a first distributed node, or information related to second forwarding TNLs allocated by a control node other than the second control node.

7. The method of claim 6, further comprising:
receiving, in response to the third message, a fourth message from the second control node,
wherein the fourth message includes information related to a Layer 1 (L1) measurement report configuration of at least one candidate cell belonging to the second control node.

8. The method of claim 1, further comprising:
obtaining, based on an early TA acquisition procedure, TA information for at least one candidate cell among the candidate cells from a second distributed node connected to the second control node; and
transmitting the obtained TA information to at least one other distributed node.

9. The method of claim 1, further comprising:
receiving a cell change notification message indicating that a terminal has been commanded to change to a target cell;
transmitting the received cell change notification message to the second control node; and
receiving a handover success message from the second control node,
wherein the cell change notification message includes at least one of identification information of the target cell or information related to a selected beam, and
wherein the handover success message includes at least one of identification information of the target cell accessed by the terminal, TA information of the target cell, or information related to a data forwarding proposal of the second control node.

10. The method of claim 9, further comprising:
transmitting the TA information of the target cell to at least one other distributed node.

11. A method performed by a first distributed node of a first base station in a wireless communication system, the method comprising:
receiving a measurement report message from a terminal; and
transmitting, to a first control node of the first base station, a message proposing an L1/L2 Triggered Mobility (LTM) based on the measurement report message,
wherein the measurement report message includes an L1 measurement report message, and
wherein the LTM includes an inter-base station LTM.

12. The method of claim 11,
wherein the message proposing the LTM includes information related to candidate cells proposed for the LTM, and
wherein the proposed candidate cells are determined based on the L1 measurement report message and include at least one cell belonging to at least one other base station.

13. The method of claim 11, further comprising:
transmitting, to the terminal, an early Timing Advance (TA) acquisition command for a second distributed node of a second base station;
transmitting, to the second distributed node of the second base station via the first control node, a message indicating that early TA acquisition has been requested from the terminal; and
obtaining TA information from the second distributed node of the second base station via the first control node.

14. The method of claim 13,
wherein the early TA acquisition command is transmitted based on TA related information obtained from the first control node, and
wherein the TA related information includes at least one of information requesting early TA acquisition for at least one cell among the candidate cells for the LTM, information indicating that early TA acquisition is not required for at least one cell among the candidate cells for the LTM, or TA information for at least one cell among the candidate cells for the LTM.

15. The method of claim 13, further comprising: transmitting the TA information obtained from the second distributed node of the second base station to at least one other distributed node.

16. The method of claim 11, further comprising:
transmitting, to the terminal, a message commanding a change to a target cell; and
transmitting, via the first control node, a cell change notification message indicating that the terminal has been commanded to change to the target cell, to a second control node of a second base station to which the target cell belongs.

17. A method performed by a second control node of a second base station in a wireless communication system, the method comprising:
receiving, from a first control node of a first base station, a first message related to a configuration of candidate cells for an L1/L2 Triggered Mobility (LTM);
performing, based on the first message, a configuration for the LTM for at least one candidate cell among the candidate cells; and
transmitting, to the first control node, a second message including information related to the at least one candidate cell.

18. The method of claim 17, further comprising:
receiving, from the first control node, a third message including information required for operation of the LTM;
obtaining, based on the third message, information related to a Layer 1 (L1) measurement report configuration of at least one candidate cell; and
transmitting, to the first control node, a fourth message including information related to the L1 measurement report configuration of the at least one candidate cell.

19. A method performed by a terminal in a wireless communication system, the method comprising:
transmitting a measurement report message to a first distributed node of a first base station; and
receiving a cell change message from the first distributed node,
wherein the cell change message indicates a cell change to a target cell belonging to a second distributed node of a second base station.

20. A first control node of a first base station in a wireless communication system, comprising:
a transceiver; and
a processor connected to the transceiver,
wherein the processor is configured to:
determine to initiate an L1/L2 Triggered Mobility (LTM) configuration, and
control to transmit a first message related to a configuration of candidate cells for the LTM,
wherein the candidate cells for the LTM include at least one cell belonging to at least one other base station, and
wherein the first message is transmitted to a second control node of a second base station included in the at least one other base station.

21. A first distributed node of a first base station in a wireless communication system, comprising:
a transceiver; and
a processor connected to the transceiver,
wherein the processor is configured to:
receive a measurement report message from a terminal, and
control to transmit, to a first control node of the first base station, a message proposing an L1/L2 Triggered Mobility (LTM) based on the measurement report message,
wherein the measurement report message includes an L1 measurement report message, and
wherein the LTM includes an inter-base station LTM.

22. A second control node (centralized unit) of a second base station in a wireless communication system, comprising:
a transceiver; and
a processor connected to the transceiver,
wherein the processor is configured to:
receive, from a first control node of a first base station, a first message related to a configuration of candidate cells for an L1/L2 Triggered Mobility (LTM),
perform, based on the first message, a configuration for the LTM for at least one candidate cell among the candidate cells, and
control to transmit, to the first control node, a second message including information related to the at least one candidate cell.

23. A terminal in a wireless communication system, comprising:
a transceiver; and
a processor connected to the transceiver,
wherein the processor is configured to:
transmit a measurement report message to a first distributed node of a first base station, and
control to receive a cell change message from the first distributed node,
wherein the cell change message indicates a cell change to a target cell belonging to a second distributed node of a second base station.

24. A communication apparatus comprising:
at least one processor; and
at least one computer memory connected to the at least one processor and storing instructions that, based on being executed by the at least one processor, perform operations comprising:
determining to initiate an L1/L2 Triggered Mobility (LTM) configuration; and
transmitting a first message related to a configuration of candidate cells for an LTM,
wherein the candidate cells for the LTM include at least one cell belonging to at least one other base station, and
wherein the first message is transmitted to a second control node of a second base station included in the at least one other base station.

25. A non-transitory computer-readable medium storing at least one instruction,
wherein the at least one instruction is executable by a processor, and
wherein the at least one instruction controls an apparatus to:
determine to initiate an L1/L2 Triggered Mobility (LTM) configuration, and
control to transmit a first message related to a configuration of candidate cells for the LTM,
wherein the candidate cells for the LTM include at least one cell belonging to at least one other base station, and
wherein the first message is transmitted to a second control node of a second base station included in the at least one other base station.
